# EUROPEAN PATENT APPLICATION

(11) **EP 4 379 849 A2**
(43) Date of publication of application: **05.06.2024**
(21) Application number: 23212034.5
(22) Date of filing: 24.11.2023
(51) Int. Cl.: H01M 4/133, H01M 4/131, H01M 4/36, H01M 4/525, H01M 4/66, H01M 10/052, H01M 10/0562, H01M 10/42, H01M 50/474, H01M 50/486, H01M 50/489, H01M 4/134, H01M 4/04

(54) **ALL-SOLID SECONDARY BATTERY**

(30) Priority: 24.11.2022 KR 20220159531
(71) Applicant: Samsung SDI Co., Ltd, Gyeonggi-do 17084 (KR)
(72) Inventor: Son, Inhyuk, 17084 Yongin-si, Gyeonggi-do (KR); Jo, Sungnim, 17084 Yongin-si, Gyeonggi-do (KR); Shim, Kyueun, 17084 Yongin-si, Gyeonggi-do (KR); Park, Taehyun, 17084 Yongin-si, Gyeonggi-do (KR); Lee, Jieun, 17084 Yongin-si, Gyeonggi-do (KR); Park, Jinhwan, 17084 Yongin-si, Gyeonggi-do (KR); Park, Kyusung, 17084 Yongin-si, Gyeonggi-do (KR)
(74) Representative: Michalski Hüttermann & Partner Patentanwälte mbB

(57) **Abstract**

An all-solid secondary battery includes an electrode assembly including a cathode layer, an anode layer, and a solid electrolyte layer between the cathode layer and the anode layer, wherein the cathode layer includes a cathode current collector, the solid electrolyte layer includes a sulfide-based solid electrolyte, the anode layer includes an anode current collector, a first anode active material layer, and a first protecting layer between the anode current collector and the first anode active material layer, the electrode assembly includes a second protecting layer on one surface or both (e.g., opposite) surfaces thereof, the first protecting layer is a conductive coating layer including a carbon-based material, the second protecting layer includes a porous multilayer member, and the porous multilayer member includes a porous cushioning layer and a porous covering layer on one surface or both (e.g., opposite) surfaces of the porous cushioning layer.

## Description

### CROSS-REFERENCE TO RELATED APPLICATION

The present application claims priority to and the benefit of Korean Patent Application No. 10-2022-0159531, filed on November 24, 2022, in the Korean Intellectual Property Office, the entire content of which is hereby incorporated by reference.

### BACKGROUND

### 1. Field

One or more embodiments relate to an all-solid secondary battery.

### 2. Description of the Related Art

In recent years, batteries providing increased energy density and safety have been actively developed. For example, lithium batteries are utilized in information devices, communication devices, automobiles, and/or the like. In the field of automobiles, safety is particularly important as it may affect human comfort and/or safety.

A lithium battery may include a liquid electrolyte that includes a flammable organic solvent. A lithium battery including a liquid electrolyte has a high risk for overheating and fire hazards in the event of a short-circuit.

A solid electrolyte has a lower risk for overheating and fire hazards in the event of a short-circuit compared to a liquid electrolyte. Such lithium batteries utilizing a solid electrolyte may provide increased safety compared to lithium batteries including a liquid electrolyte.

### SUMMARY

A solid electrolyte may easily react with an anode current collector and causes side reactions. For example, if (e.g., when) a sulfide-based solid electrolyte is in contact with a copper current collector during charging and discharging processes, side reactions between the sulfide-based solid electrolyte and the copper current collector may deteriorate the lifespan of a lithium battery. Therefore, there is a desire and/or need for methods of preventing or substantially preventing the solid electrolyte and the anode current collector from coming into contact with each other.

During charging and discharging of a lithium battery, volume changes of an anode layer may give rise to defects such as cracks in a solid electrolyte layer and/or an anode layer. For example, during the process in which a lithium metal layer is plated and/or dissolved between a solid electrolyte layer and an anode current collector during charging and discharging of a lithium battery, there may be a substantially non-uniform pressure exerted on the solid electrolyte layer and/or the anode current collector. Such a substantially non- uniform pressure may give rise to defects, such as cracks, in the solid electrolyte layer and/or the anode layer (e.g., an anode current collector). Through these defects, lithium may grow and cause a short circuit of the lithium battery. Further, because the charging and discharging processes of the lithium battery cause volume changes of the anode layer, a substantially uniform pressure may be applied to the lithium battery so as to maintain the contact between the cathode layer and the solid electrolyte layer and/or between the anode layer and the solid electrolyte layer, while accommodating such volume changes of the anode layer. To more effectively accommodate volume changes in the lithium battery, an elastic member may be disposed on one surface of the anode layer. In such cases, however, air pockets may form between the elastic member and the anode layer, thus causing the pressure applied to the lithium battery to be substantially non- uniform. A substantially non- uniform pressure applied to the lithium battery during charging and discharging of the lithium battery may cause defects such as cracks in the solid electrolyte layer and/or the anode layer. Growth of lithium through these cracks, or an increase of internal resistance due to such cracks may cause a short circuit in the lithium battery, or may deteriorate the cycling performance of the lithium battery. Therefore, there is a desire and/or need for methods of effectively mitigating and/or accommodating volume changes of the anode layer.

Because an elastic member generally has adhesive properties, during the process of disposing the elastic member in a lithium battery, a defect may arise due to accidental adhesion of the elastic member and the lithium battery. Therefore, there is a desire and/or need for a method that enables rapid and efficient manufacturing of a lithium battery by suppressing or reducing the o occurrence of defects during the manufacturing process of a lithium battery.

Aspects of one or more embodiments relate to an all-solid secondary battery, i.e., all-solid rechargeable battery, having a novel structure.

Additional aspects will be set forth in part in the description which follows and, in part, will be apparent from the description, or may be learned by practice of the presented embodiments of the disclosure.

According to one or more embodiments of the present disclosure, an all-solid secondary battery includes an electrode assembly including a cathode layer, an anode layer, and a solid electrolyte layer between the cathode layer and the anode layer, wherein the cathode layer includes a cathode current collector, the solid electrolyte layer includes a sulfide-based solid electrolyte, the anode layer includes an anode current collector, a first anode active material layer, and a first protecting layer between the anode current collector and the first anode active material layer, the electrode assembly includes a second protecting layer on one surface or both (e.g., opposite) surfaces thereof, the first protecting layer is a conductive coating layer including a carbon-based material, the second protecting layer includes a porous multilayer member, and the porous multilayer member includes a porous cushioning layer and a porous covering layer on one surface or both (e.g., opposite) surfaces of the porous cushioning layer.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1 is a cross-sectional view of an all-solid secondary battery according to one or more embodiments of the present disclosure;
FIG. 2 is a cross-sectional view of a bi-cell all-solid secondary battery according to one or more embodiments of the present disclosure;
FIG. 3 is a cross-sectional view of an all-solid secondary battery according to one or more embodiments of the present disclosure;
FIG. 4 is a cross-sectional view of an all-solid secondary battery according to one or more embodiments of the present disclosure;
FIG. 5 is a cross-sectional view of a bi-cell all-solid secondary battery according to one or more embodiments of the present disclosure;
FIG. 6A is a cross-sectional view of a porous multilayer member according to one or more embodiments of the present disclosure;
FIG. 6B is a cross-sectional view of a porous multilayer member according to one or more embodiments of the present disclosure;
FIG. 7 is a cross-sectional view of an all-solid secondary battery according to one or more embodiments of the present disclosure; and
FIG. 8 is a cross-sectional view of an all-solid secondary battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure. The illustrated embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, embodiments are merely described below, by referring to the drawings, to explain aspects of the present description.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that when an element or layer is referred to as being "on," "connected to," "coupled to," or "over" another element or layer, it can be directly on, connected to, coupled to, or over the other element or layer, or one or more intervening elements or layers may be present. In contrast, when an element is referred to as being "directly on," "directly connected to," "directly coupled to," or "directly over" another element, there are no intervening elements present. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer, or section, from another element, component, region, layer, or section. For example, a first element, component, region, layer, or section could be termed a second element, component, region, layer, or section, without departing from the spirit and scope of the present disclosure.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. The term "at least one" should not be interpreted as being limited to a singular form. It will be further understood that the terms "comprises," "comprising," "includes," and "including," when used in this specification, specify the presence of the stated features, regions, integers, steps, operations, elements, and/or components, but do not preclude the presence or addition of one or more other features, regions, integers, steps, operations, elements, components, and/or groups thereof.

Furthermore, spatially relative terms, such as "lower," "bottom," or "below," "upper," "top," "above," and the like, may be used herein to conveniently describe one element or feature's relationship to another element(s) or feature(s). It will be understood that spatially relative terms are intended to encompass different orientations of the device while the device is in use or operation, in addition to the orientation depicted in the drawings. For example, if the device in one of the drawings is turned over, elements described as being on the "lower" or "bottom" side of other elements would then be oriented on "upper" or "top" sides of the other elements. Therefore, the example term "lower" can therefore, encompasses both an orientation of "lower" and "upper." The device may be placed in other orientations (e.g., may be rotated by 90 degrees or in a different direction), and spatially relative terms used herein should be interpreted accordingly.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Embodiments are described herein with reference to cross section illustrations that are schematic illustrations of idealized embodiments. As such, variations from the illustrated shapes as a result of, for example, manufacturing techniques and/or tolerances, are to be expected. Thus, embodiments described herein should not be construed as limited to the particular shapes of regions as illustrated herein, but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

"Group" refers to a group in the Periodic Table of Elements of the Elements according to the 1-18 Group numbering system by the International Union of Pure and Applied Chemistry ("IUPAC").

The term "particle diameter" as used herein refers to an average particle diameter when the particle is spherical, and refers to an average major axis length when the particle is non-spherical. The particle diameter may be measured utilizing a particle size analyzer (PSA). The term "particle diameter" refers to an average particle diameter, for example. The term "average particle diameter" refers to, for example, a median particle diameter (D50).

D50 may refer to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size, as, for example, measured by a laser diffraction method.

D90 may refer to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size, as, for example, measured by a laser diffraction method.

D10 may refer to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size, as, for example, measured by a laser diffraction method.

In one or more embodiments of the present disclosure, "particle diameter" may be measured utilizing a manual or software from SEM images and/or TEM images of a cross-section of an all-solid secondary battery, and may be an arithmetic mean value of particle diameters of a plurality of particles shown in such images.

Also, the term "diameter" as used herein refers to an average nanofiber diameter when the fiber has a circular cross-section, and refers to an average major axis length when the fiber is non-circular in its cross-section.

As used herein, the term "metal" refers to both metals and metalloids such as silicon and germanium, in an elemental or ionic state.

As used herein, the term "alloy" means a mixture of two or more metals.

The term "electrode active material" as used herein refers to an electrode material capable of undergoing lithiation and delithiation.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of removing lithium from an electrode active material.

As used herein, the terms "charging" and "to charge" refer to a process of providing electrochemical energy to a battery.

As used herein, the terms "discharging" and "to discharge" refer to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

While specific examples are described herein, there may be alternatives, modifications, variations, improvements, and substantial equivalents of the examples disclosed herein, including those that are presently unforeseen or unappreciated, which may arise from applicants or those skilled in the art. Accordingly, the appended claims as filed and as they can be amended are intended to embrace all such alternatives, modifications, variations, improvements and substantial equivalents.

Hereinbelow, an all-solid secondary battery according to embodiments will be described in greater detail.

### All-Solid Secondary Battery

An all-solid (e.g., solid state) secondary battery according to one or more embodiments may include an electrode assembly provided with: a cathode layer; an anode layer; and a solid electrolyte layer disposed between the cathode layer and the anode layer, wherein the cathode layer may include a cathode current collector, the solid electrolyte layer may include a sulfide-based solid electrolyte, the anode layer may include an anode current collector, a first anode active material layer, and a first protecting layer disposed between the anode current collector and the first anode active material layer, the electrode assembly may include a second protecting layer disposed on one surface or both (e.g., opposite) surfaces thereof, the first protecting layer may be a conductive coating layer including a carbon-based material, the second protecting layer may include a porous multilayer member, and the porous multilayer member may include a porous cushioning layer and a porous covering layer disposed on one surface or both (e.g., opposite) surfaces of the porous cushioning layer. As the all-solid secondary battery includes the first protecting layer, side reactions due to a contact between the sulfide-based solid electrolyte and the anode current collector may be suppressed or reduced. As the all-solid secondary battery includes the second protecting layer, a short-circuit caused by a crack in the solid electrolyte layer and/or the anode layer due to volume changes of the anode layer during charging and discharging of the all-solid secondary battery may be suppressed or reduced. As a result, a short-circuit of the all-solid secondary battery may be prevented or reduced and lifetime characteristics of the all-solid secondary battery may improve.

For example, the all-solid secondary battery may prevent or reduce degradation of the anode current collector by the solid electrolyte by including the first protecting layer disposed on one side of the anode current collector; and may prevent or reduce degradation of the anode current collector due to volume changes of the anode layer during charge and discharge processes by including the second protecting layer disposed on the other side of the anode current collector. As the all-solid secondary battery includes both the first protecting layer and the second protecting layer, a short circuit in the all-solid secondary battery may be more effectively suppressed or reduced and lifetime characteristics of the all-solid secondary battery may improve. Furthermore, manufacturing efficiency may improve as the occurrence of defects is suppressed or reduced during the manufacturing process of all-solid secondary batteries.

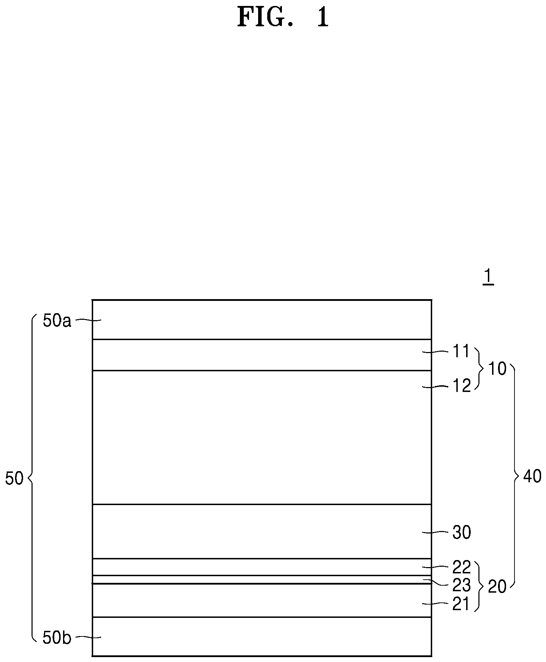

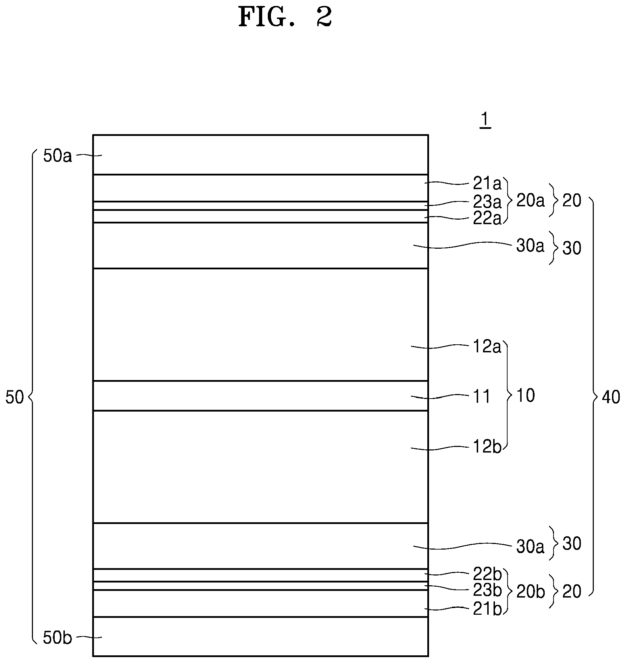

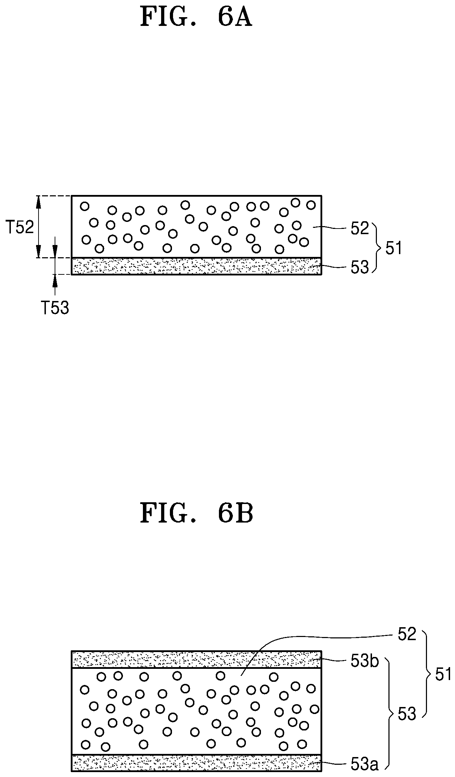

Referring to FIGs. 1 to 5, an all-solid secondary battery 1 may include an electrode assembly 40 provided with a cathode layer 10; an anode layer 20; and a solid electrolyte layer 30, 30a, 30b disposed between the cathode layer 10 and the anode layer 20. The cathode layer 10 may include a cathode current collector 11 and a first cathode active material layer 12, 12a, 12b. The solid electrolyte layer 30 may include a sulfide-based solid electrolyte. The anode layer 20, 20a, 20b may include an anode current collector 21, 21a, 21b; a first anode active material layer 22, 22a, 22b; and a first protecting layer 23, 23a, 23b disposed between the anode current collector 21, 21a, 21b and the first anode active material layer 22, 22a, 22b. The all-solid secondary battery 1 may include a second protecting layer 50, 50a, 50b disposed on one surface or both (e.g., opposite) surfaces of the electrode assembly 40. The first protecting layer 23, 23a, 23b may be a conductive coating layer including a carbon-based material. Referring to FIGs. 1 to 6, the second protecting layer 50, 50a, 50b may include a porous multilayer member 51, as shown, for example in FIGs. 6A and 6B. Referring to FIGs. 6A and 6B, the porous multilayer member 51 may include a porous cushioning layer 52; and a porous covering layer 53, 53a, 53b disposed on one surface or both (e.g., opposite) surfaces of the porous cushioning layer 52.

### Anode Layer

### Anode Layer: First Protecting Layer

Referring to FIGs. 1 to 5, the anode layer 20 may include an anode current collector 21, 21a, 21b; a first anode active material layer 22, 22a, 22b; and a first protecting layer 23, 23a, 23b disposed between the anode current collector 21, 21a, 21b and the first anode active material layer 22, 22a, 22b.

As the first protecting layer 23, 23a, 23b is disposed on one side of the anode current collector 21, 21a, 21b, the contact between the anode current collector 21, 21a, 21b and the sulfide-based solid electrolyte is prevented or reduced, and as a result, degradation of the anode current collector 21, 21a, 21b, such as corrosion of the anode current collector 21, 21a, 21b, may be prevented or reduced. The first protecting layer 23, 23a, 23b may be disposed on one side of the anode current collector 21, 21a, 21b, facing the solid electrolyte layer. The first protecting layer 23, 23a, 23b may be, for example, a conductive coating layer including a carbon-based material. Because the first protecting layer 23, 23a, 23b is a conductive coating layer, an increase of the internal resistance of the all-solid secondary battery, despite the addition of the first protecting layer 23, 23a, 23b, may be suppressed or reduced. The first protecting layer 23, 23a, 23b may be disposed on the other side opposite to the one side of the anode current collector 21, 21a, 21b, and may also be disposed on a side surface between the one side and the other side. As the first protecting layer 23, 23a, 23b covers the anode current collector 21, 21a, 21b in part or in whole, degradation due to the sulfide-based solid electrolyte may be more effectively prevented or reduced. Accordingly, lifetime characteristics of an all-solid secondary battery 1 including the first protecting layer 23, 23a, 23b may improve.

The first protecting layer 23, 23a, 23b may include, for example, a carbon-based material, and the carbon-based material may include, for example, a carbon-based nanostructure. The carbon-based nanostructure may be a structure having nano-sized dimensions. The carbon-based nanostructure may include a one-dimensional nanostructure, a two-dimensional nanostructure, a three-dimensional nanostructure, or a combination thereof. The one-dimensional carbon-based nanostructure may include, for example, carbon nanorods, nanofibers, carbon nanotubes, or a combination thereof. The two-dimensional carbon-based nanostructure may include, for example, carbon nanosheets, carbon nanobelts, carbon nanoflakes, graphene, graphene oxide (GO), reduced graphene oxide, (rGO), or a combination thereof. The three-dimensional carbon-based nanostructure may be a structure in which a plurality of one-dimensional carbon-based nanostructures and/or two-dimensional carbon-based nanostructures are connected or stacked.

The first protecting layer 23, 23a, 23b may include a carbon-based material, and the carbon-based material may be doped with a dopant. The dopant may include an n-type or kind dopant, a p-type or kind dopant, or a combination thereof. The n-type or kind dopant may be, for example, a dopant that due to having more valence electrons than carbon, introduces electrons into a carbon-based material. The p-type or kind dopant may be a dopant that due to having fewer valence electrons than carbon, introduces electron holes in a carbon-based material. The carbon-based material may include, for example, a dopant-doped graphene. The doped graphene may include an n-type or kind dopant, a p-type or kind dopant, or a combination thereof. The dopant may include, for example, nitrogen (N), phosphorus (P), boron (B), sulfur (S), fluorine (F), chlorine (Cl), bromine (Br), germanium (Ge), gallium (Ga), or a combination thereof. For example, nitrogen (N) and phosphorus (P) are n-type or kind dopants. For example, gallium (Ga) is a p-type or kind dopant. The content (e.g., amount) of dopant in the doped carbon-based material may be, for example, 3 at% or less or 1 at% or less. As the carbon-based material is doped with a dopant, the carbon-based material may have a further increased conductivity. As the first protecting layer 23, 23a, 23b includes the doped carbon-based material, interfacial resistance between the solid electrolyte layer and the first protecting layer 23, 23a, 23b, and/or interfacial resistance between the first protecting layer 23, 23a, 23b and the anode current collector 21, 21a, 21b may further decrease. Consequently, internal resistance of an all-solid secondary battery may decrease, and high-rate performance thereof may further improve.

If (e.g., when) the first protecting layer 23, 23a, 23b includes a carbon-based material, the carbon-based material may be arranged in a direction with respect to the surface of the anode current collector 21, 21a, 21b, for example. The carbon-based material may be graphene, for example, and the graphene may be arranged in a certain direction with respect to the surface of the anode current collector 21, 21a, 21b. The carbon-based material may be, for example, arranged in a direction parallel to the surface of the anode current collector 21, 21a, 21b. The carbon-based material may be, for example, graphene, and the graphene may be arranged on the anode current collector 21, 21a, 21b parallel to the surface of the anode current collector 21, 21a, 21b. The graphene may be disposed as a single layer or as multiple layers on the surface of the anode current collector 21, 21a, 21b. The carbon-based material may be, for example, arranged in an out-of-plane direction (or protruded direction) with respect to the surface of the anode current collector 21, 21a, 21b. The carbon-based material may be, for example, graphene, and the graphene may be arranged on the anode current collector 21, 21a, 21b parallel to the surface of the anode current collector 21, 21a, 21b. The graphene may be disposed as a single layer, or multiple layers. For example, the graphene may be arranged at an angle of about 30° to about 150°, about 60° to about 120°, or about 80° to about 100°, with respect to the surface of the anode current collector 21, 21a, 21b. The graphene may be arranged, for example, in a vertical direction with respect to the surface of the anode current collector 21, 21a, 21b.

The first protecting layer 23, 23a, 23b may further include a binder. As the first protecting layer 23, 23a, 23b includes a binder, adhesion between the anode current collector 21, 21a, 21b and the first protecting layer 23, 23a, 23b may further improve. The first protecting layer 23, 23a, 23b may include, for example, the carbon-based material described above and the binder.

The binder included in the first protecting layer 23, 23a, 23b may be a binder selected from binders included in the anode active material layer. The first protecting layer 23, 23a, 23b may include the same binder as the first anode active material layer. The binder included in the first protecting layer 23, 23a, 23b may be, for example, a fluorine-based binder. The fluorine-based binder included in the first protecting layer 23, 23a, 23b may be, for example, polyvinylidene fluoride (PVDF). For example, the first protecting layer 23, 23a, 23b may be disposed on the anode current collector by a dry method or a wet method.

The binder included in the first protecting layer 23, 23a, 23b may be, for example, a conductive binder or a non-conductive binder. Examples of a conductive binder may include ion-conductive binders and/or electron-conductive binders. Binders having both (e.g., simultaneously) ion conductivity and electron conductivity belong to both ion-conductive binders and electron-conductive binders. The ionically conductive binder may include, for example, polystyrene sulfonate (PSS), a polyvinylidene fluoride-hexafluoropropylene copolymer (PVDF-HFP), polyvinyl fluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylene deoxythiophene (PEDOT), polypyrrole (PPY), polyacrylonitrile (PAN), polyaniline, polyacetylene, and/or the like. The ionically conductive binder may include polar functional groups. Examples of the ionically conductive binder containing polar functional groups may include Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and/or the like. Examples of the electronically conductive binder may include polyacetylene, polythiophene, polypyrrole, poly(p-phenylene), poly(phenylenevinylene), poly(phenylenesulfide), polyaniline, and/or the like. The first protecting layer 23, 23a, 23b may be, for example, a conductive coating layer including a conducting polymer.

The first protecting layer 23, 23a, 23b may be disposed on the anode current collector 21, 21a, 21b by a wet method. Examples of the wet method may include spin coating, dip coating, and/or the like. The first protecting layer 23, 23a, 23b may be disposed on the anode current collector 21, 21a, 21b by coating the surface of the anode current collector 21, 21a, 21b with a composition containing a carbon-based material, a binder, and a solvent, and drying the composition. In one or more embodiments, the first protecting layer 23, 23a, 23b may be disposed on the anode current collector 21, 21a, 21b by a dry method. In the dry method, the first protecting layer 23, 23a, 23b may be disposed on the anode current collector 21, 21a, 21b, for example, by deposition such as CVD, PDV, and/or the like. For example, by deposition of a single layer or multiple layers of a carbon-based material, *e.g.,* graphene, on an electrode current collector, the first protecting layer 23, 23a, 23b may be disposed on the anode current collector 21, 21a, 21b. The first protecting layer 23, 23a, 23b disposed by a dry method may be composed of a carbon-based material, *e.g.,* graphene, and not contain a binder.

The first protecting layer 23, 23a, 23b may have a monolayer structure, or a multilayer structure including a plurality of layers. The plurality of layers may each have a different composition, structure, and arrangement from one another. The first protecting layer 23, 23a, 23b may have a multilayer structure such as a two-layer structure, a three-layer structure, a four-layer structure, and/or the like. For example, the first protecting layer 23, 23a, 23b may have a monolayer structure including a first layer that is disposed on the anode current collector 21, 21a, 21b and contains graphene horizontally arranged with respect to the surface of the anode current collector 21, 21a, 21b. For example, the first protecting layer 23, 23a, 23b may have a monolayer structure including a second layer that is disposed on the anode current collector 21, 21a, 21b and contains graphene vertically arranged with respect to the surface of the anode current collector 21, 21a, 21b. For example, the first protecting layer 23, 23a, 23b may have a two-layer structure including: a first layer disposed on the anode current collector 21, 21a, 21b and containing graphene horizontally arranged with respect to the surface of the anode current collector 21, 21a, 21b; and a second layer disposed on the first layer and containing graphene vertically arranged with respect to the surface of the anode current collector 21, 21a, 21b. For example, the first protecting layer 23, 23a, 23b may have a two-layer structure including: a first layer disposed on the anode current collector 21, 21a, 21b and containing graphene arranged horizontally with respect to the surface of the anode current collector 21, 21a, 21b; a second layer disposed on the first layer and containing graphene arranged vertically with respect to the surface of the anode current collector 21, 21a, 21b; and a third layer disposed on the second layer and containing graphene arranged horizontally with respect to the surface of the anode current collector 21, 21a, 21b.

The first protecting layer 23, 23a, 23b may have a thickness of, for example, 10 µm or less, 5 µm or less, 3 µm or less, 2 µm or less, 1 µm or less, 500 nm or less, 300 nm or less, or 100 nm or less. For example, the thickness of the first protecting layer 23, 23a, 23b may be greater than or equal to the thickness of a single layer of graphene, or may be 1 nm or more, 5 nm or more, 10 nm or more, 20 nm or more, or 50 nm or more. The thickness of the first protecting layer 23, 23a, 23b may be, for example, about a monolayer graphene thickness to about 10 µm, about 1 nm to about 5 µm, about 5 nm to about 3 µm, about 10 nm to about 3 µm, about 20 nm to about 3 µm, or about 50 nm to about 3 µm. If (*e.g*., when) the first protecting layer 23, 23a, 23b is excessively thick, the all-solid secondary battery may have an increased internal resistance and reduced energy density. If (*e.g*., when) the first protecting layer 23, 23a, 23b is excessively thin, it may be difficult to effectively prevent or reduce side reactions between the anode current collector 21, 21a, 21b and the solid electrolyte 30, 30a, 30b.

Referring to FIGs. 1 to 5, the first protecting layer 23, 23a, 23b may be, for example, directly disposed on one side of the anode current collector 21, 21a, 21b. As the first protecting layer 23, 23a, 23b is directly disposed on one side of the anode current collector 21, 21a, 21b, the anode current collector 21, 21a, 21b may be more effectively protected from the solid electrolyte 30, 30a, 30b. As the first protecting layer 23, 23a, 23b strongly adheres to the anode current collector 21, 21a, 21b, the first protecting layer 23, 23a, 23b may have improved durability. The first protecting layer 23, 23a, 23b may be inert to a sulfide-based solid electrolyte, for example. The first protecting layer 23, 23a, 23b may not give rise to side reactions with a sulfide-based solid electrolyte during charging and discharging. Because the first protecting layer 23, 23a, 23b is inert to the sulfide-based solid electrolyte, it may be possible to more effectively prevent or reduce the anode current collector 21, 21a, 21b and the sulfide-based solid electrolyte from coming in contact with each other.

### Anode Layer: Second Protecting Layer

Referring to FIGs. 1 to 5, the second protecting layer 50, 50a, 50b may be disposed on the anode layer 20 of the electrode assembly 40.

Because during charging and discharging of the all-solid secondary battery 1, the anode layer 20, 20a, 20b undergoes a larger volume change than the cathode layer 10 and the solid electrolyte layer 30, 30a, 30b, the position of the second protecting layer 50, 50a, 50b being adjacent to the anode layer 20, 20a, 20b may allow a volume change of the anode layer 20, 20a, 20b to be more effectively accommodated. As the second protecting layer 50, 50a, 50b is disposed on the anode layer 20, 20a, 20b, it may be possible to more effectively prevent or reduce defects, such as crack formation, in the solid electrolyte layer 30, 30a, 30b and/or the anode current collector 21, 21a, 21b due to volume changes of the anode layer 20, 20a, 20b during charging and discharging of the anode layer 20, 20a, 20b, from causing a short circuit or deteriorating lifetime characteristics of the all-solid secondary battery 1. Further, as the second protecting layer 50, 50a, 50b applies a substantially uniform pressure to the anode layer 20, 20a, 20b, it may be possible to induce substantially uniform plating of lithium metal at the anode layer 20, 20a, 20b, for example. Therefore, defect formation in the all-solid secondary battery 1 due to substantially non-uniform plating of lithium metal may be more effectively prevented or reduced. Once an electrode assembly including a cathode layer; an anode layer; and a solid electrolyte layer is prepared, the second protecting layer 50, 50a, 50b may be disposed on one side of the anode layer included in the electrode assembly and may be consequently disposed on the anode current collector. For example, the second protecting layer 50, 50a, 50b may be disposed directly on the anode current collector 21, 21a, 21b before the electrode assembly is sealed with a sealing material. In one or more embodiments, after the anode current collector 21, 21a, 21b is sealed with a sealing material, the second protecting layer 50, 50a, 50b may be disposed on the anode current collector 21, 21a, 21b through the sealing material.

Referring to FIGs. 1 to 5, the anode current collector 21, 21a, 21b may include a first surface adjacent to the solid electrolyte layer 30, 30a, 30b, and a second surface opposing the first surface, wherein a first protecting layer 23, 23a, 23b may be disposed on the first surface, and a second protecting layer 50, 50a, 50b may be disposed on the second surface. As both surfaces of the anode current collector 21, 21a, 21b are protected by both the first protecting layer 23, 23a, 23b and the second protecting layer 50, 50a, 50b concurrently (*e.g.,* simultaneously), durability of the anode current collector 21, 21a, 21b may further improve. The all-solid secondary battery may include, for example, a composite anode current collector 21, 21a, 21b having the structure of first protecting layer 23, 23a, 23b/anode current collector 21, 21a, 21b/second protecting layer 50, 50a, 50b. As the all-solid secondary battery includes the composite anode current collector 21, 21a, 21b having the above structure, cycling performance of the all-solid secondary battery may further improve.

The second protecting layer 50, 50a, 50b may include a porous multilayer member, and the porous multilayer member may include a porous cushioning layer; and a porous covering layer disposed on one surface or both (e.g., opposite) surfaces of the porous cushioning layer.

Referring to FIGs. 6A and 6B, the porous multilayer member 51 may include the porous cushioning layer 52.

Due to the porous nature of the porous multilayer member 51, the formation of air pockets between the electrode assembly 40 and the porous multilayer member 51, or between the anode current collector 21, 21a, 21b and the porous multilayer member 51 may be suppressed or reduced. Further, due to the porous nature of the porous multilayer member 51, volume changes of the electrode assembly 40 may be more effectively accommodated. The porous multilayer member 51 may exert a substantially uniform pressure to one surface or both (e.g., opposite) surfaces of the electrode assembly 40. Therefore, during charging and discharging of the all-solid secondary battery 1, substantially non-uniform plating of lithium metal at the anode layer 20 may be prevented or reduced. Consequently, a short-circuit of the all-solid secondary battery 1 may be prevented or reduced, and lifetime characteristics of the all-solid secondary battery 1 may improve.

The porous cushioning layer 52 may impart a cushioning function to the porous multilayer member 51. The porous cushioning layer 52 may provide, for example, stress relaxation and a restoring force. The porous cushioning layer 52 may apply a substantially uniform pressure to the all-solid secondary battery 1, while effectively accommodating volume changes of the electrode assembly 40.

Referring to FIGs. 6A and 6B, the elastic modulus of the porous cushioning layer 52 may be smaller than the elastic modulus of the porous covering layer 53. As the porous cushioning layer 52 has a smaller elastic modulus than that of the porous covering layer 53, the porous cushioning layer 52 may be able to accommodate a majority of volume changes of the all-solid secondary battery 1. Accordingly, the porous multilayer member 51 may accommodate volume changes of the all-solid secondary battery 1 more effectively, while applying a substantially uniform pressure to the all-solid secondary battery 1. The porous cushioning layer 52 may have an elastic modulus of, for example, 500 MPa or less, 300 MPa or less, or 100 MPa or less. The porous cushioning layer 52 may have an elastic modulus of, for example, about 1 MPa to about 500 MPa, about 10 MPa to about 300 MPa, or about 10 MPa to about 100 MPa. The porous covering layer 53 may have an elastic modulus of, for example, 100 MPa or more, 300 MPa or more, or 500 MPa or more. The porous covering layer 53 may have an elastic modulus of, for example, about 100 MPa to about 5 GPa, about 300 MPa to about 3 GPa, or about 500 MPa to about 1 GPa. The elastic modulus of the porous cushioning layer 52 may be 90 % or less, 80 % or less, 70 % or less, 50 % or less, 30 % or less, 20 % or less, or 10 % or less, with respect to the elastic modulus of the porous covering layer 53. The elastic modulus may be measured, for example, by stress-strain testing of a specimen (e.g., tensile testing).

Referring to FIGs. 6A and 6B, the thickness of the porous cushioning layer 52 may be greater than the thickness of the porous covering layer 53. As the porous cushioning layer 52 has a larger thickness than that of the porous covering layer 53, the porous cushioning layer 52 may accommodate most of volume changes of the all-solid secondary battery 1. Thus, the porous multilayer member 51 may accommodate volume changes of the all-solid secondary battery 1 more effectively.

A thickness T52 of the porous cushioning layer may be, for example, 300 µm or less, 200 µm or less, 100 µm or less, or 50 µm or less. The thickness T52 of the porous cushioning layer may be, for example, about 1 µm to about 300 µm, about 5 µm to about 250 µm, about 10 µm to about 200 µm, or about 50 µm to about 150 µm. If (e.g., when) the thickness T52 of the porous cushioning layer is too large, the energy density of the all-solid secondary battery 1 may decrease, and if (e.g., when) the thickness T52 of the porous cushioning layer is too small, the cushioning effect may be insignificant.

The porous cushioning layer 52 may have an air permeability of, for example, 1,000 sec/100 cc or more, 5,000 sec/100 cc or more, or 10,000 sec/100 cc or more. The porous cushioning layer 52 may have an air permeability of, for example, about 1,000 sec/100 cc to about 50,000 sec/100cc, about 5,000 sec/100 cc to about 50,000 sec/100cc, or about 10,000 sec/100 cc to about 50,000 sec/100cc. Air permeability may be measured as Gurley values. The Gurley values may be measured by a method in accordance with JIS P8117. As the porous cushioning layer 52 has an air permeability in the above ranges, volume changes of the all-solid secondary battery 1 may be effectively accommodated.

The porous cushioning layer 52 may have a porosity of, for example, about 5% to about 95%, about 10% to about 90%, about 20% to about 80%, about 30% to about 70%, or about 35% to about 55%. As the porous cushioning layer 52 has a porosity in the above ranges, volume changes of the electrode assembly 40 may be effectively accommodated. The porosity may be calculated from the volume and weight of the porous cushioning layer 52, and densities of materials constituting the porous cushioning layer 52. In one or more embodiments, the porosity of the porous cushioning layer 52 may be measured by a liquid or gas adsorption method based on ASTM D-2873.

The size of cells or pores included in the porous cushioning layer 52 may be, for example, about 0.1 µm to about 50 µm, about 1 µm to about 30 µm, about 1 µm to about 10 µm, or about 0.1 µm to about 5 µm. The size of cells or pores may be an average cell size or an average pore size. As the porous cushioning layer 52 has a pore size in the above ranges, volume changes of the electrode assembly 40 may be more effectively accommodated. The size of pore may be determined from scanning electron microscopic (SEM) images, by utilizing a mercury porosimeter or capillary flow porosimeter, or through the BET6-point method based on nitrogen gas adsorption flow utilizing a porosimetry analyzer (e.g., Belsorp-II mini, Bell Japan Inc.).

The porous cushioning layer 52 may have, for example, a monolayer structure or a multilayer structure. The multilayer structure may be, for example, a two-layer structure, a three-layer structure, or a four-layer structure. Layers included in the multilayer structure may be different from each other in terms of the composition, porosity, air permeability, pore size, and/or the like.

The porous cushioning layer 52 may include, for example, a porous foam, a porous sponge, or a combination thereof. The porous cushioning layer 52 may include, for example, a porous foam sheet, a porous sponge sheet, or a combination thereof. As the porous cushioning layer 52 has the above structures, porous properties and a cushioning function may concurrently (e.g., simultaneously) be provided. The porous foam may include, for example, closed cells, open cells, or a combination thereof. The porous sponge may include, for example, closed cells, open cells, or a combination thereof. The closed cells refer to closed pores, which are cells or pores that are disconnected from the surrounding atmosphere. The open cells refer to open cells or pores that are connected to the surrounding atmosphere. The porous cushioning layer 52 may include, for example, a closed-cell porous foam, an open-cell porous foam, a closed-cell porous sponge, an open-cell porous sponge, or a combination thereof. For example, the porous foam may include both closed cells and open cells at the same time. For example, the porous sponge may include both closed cells and open cells at the same time.

The porous cushioning layer 52 may be, for example, an adhesive layer. Due to adhesive properties of the porous cushioning layer 52, the porous covering layer 53 may be easily attached to one surface or both (e.g., opposite) surfaces of the porous cushioning layer 52. As the porous cushioning layer 52 is an adhesive layer, once the porous covering layer 53 is attached onto the porous cushioning layer 52, the porous covering layer 53 may not easily separate therefrom. The porous cushioning layer 52r may have viscoelasticity. For example, the porous foam sheet and the porous sponge sheet may be an adhesive sheet.

The porous cushioning layer 52 may include a polymer material, a rubber material, or a combination thereof. As the porous cushioning layer 52 includes a polymer material, a rubber material, or a combination thereof, the porous cushioning layer 52 may have stress relaxation and a restoring force. The polymer material may include, for example, a polyurethane-based polymer, a polyacrylic-based polymer, a polystyrene-based polymer, a polyester-based polymer, a polyamide-based polymer, a polyolefin-based polymer, or a combination thereof. The polymer material may be, for example, a polymer resin. The polymer material may be, for example, an adhesive resin. Examples of the rubber material may include natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene rubber (CR), halogenated isoprene rubber, halogenated isobutylene copolymers, butyl rubber (IIR), halogenated isobutylene-p-methyl styrene rubber, or a combination thereof. The polyurethane-based polymer may include, for example, polyester-based polyurethane, polyether-based polyurethane, or a combination thereof. The polyacrylic-based polymer may include, for example, polyacrylate, polymethyl acrylate, polymethacrylate, polymethyl methacrylate, or a combination thereof. The polystyrene-based polymer may include, for example, a styrene-ethylene-butylene copolymer (SEB), a styrene-butadiene-styrene copolymer (SBS), hydrogenated SBS (styrene-ethylene-butylene-styrene copolymers (SEBS)), a styrene-isoprene-styrene copolymer (SIS), hydrogenated SIS (styrene-ethylene-propylene-styrene copolymers (SEPS)), a styrene-isobutylene-styrene copolymer (SIBS), styrene-butadiene-styrene-butadiene (SBSB), styrene-butadiene-styrene-butadiene-styrene (SBSBS), polystyrene (PS), an acrylonitrile styrene copolymer (AS), an acrylonitrile butadiene-styrene copolymer (ABS), or a combination thereof. The polyester-based polymer may include, for example, polyethylene terephthalate, polybutylene terephthalate, or a combination thereof. The polyamide-based polymer may include, for example, Polyamide 6, Polyamide 11, Polyamide 12, Polyamide 66, Polyamide 610, or a combination thereof. The polyolefin-based polymer may include, for example, polyethylene, polypropylene, an ethylene propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene/methacrylic acid copolymer, an ethylene-methacrylic acid ethyl copolymer, an ethylene methacrylic acid butyl copolymer, an ethylene-methyl acrylate copolymer, an ethylene-ethyl acrylate copolymer, an ethylene-butyl acrylate copolymer, a propylene-methacrylic acid copolymer, a propylene-methacrylic acid methyl copolymer, a propylene-methacrylic acid ethyl copolymer, a propylene-methacrylic acid butyl copolymer, a propylene-methylacrylate copolymer, a propylene-acrylic acid ethyl copolymer, a propylene-butylacrylate copolymer, an ethylene-vinyl acetate polymer (EVA), a polyolefin of a propylene vinyl acetate copolymer, or a combination thereof.

Referring to FIGs. 6A and 6B, the porous multilayer member 51 may include the porous cushioning layer 52; and the porous covering layer 53, 53a, 53b, disposed on one surface or both (e.g., opposite) surfaces of the porous cushioning layer 52.

The porous covering layer 53 may be disposed on one surface or both (e.g., opposite) surfaces of the porous cushioning layer 52 to provide a more uniform (e.g., a substantially more uniform) surface to the porous multilayer member 51. The porous covering layer 53 may provide protection to keep the porous cushioning layer 52 from contaminations and/or unnecessary contact with the outside environment. Due to the porous nature of the porous covering layer 53, the formation of air pockets between the porous multilayer member 51 and the electrode assembly 40 may be more effectively prevented or reduced.

The porous covering layer 53 may be, for example, a non-adhesive layer. Due to the non-adhesive nature of the porous covering layer 53, the porous multilayer member 51 provided with the porous covering layer 53 may not have adhesive properties. The porous multilayer member 51 may be, for example, easily wound with the electrode assembly 40, or may be easily disposed on one surface or both (e.g., opposite) surfaces of the electrode assembly 40. The porous multilayer member 51 may be, for example, easily disposed continuously between a plurality of electrode assemblies 40. Accordingly, the ease or efficiency of operation during the manufacturing process of the all-solid secondary battery 1 may significantly improve.

Thickness T53 of the porous covering layer may be, for example, 30 µm or less, 20 µm or less, or 10 µm or less. Thickness T53 of the porous covering layer may be, for example, about 0.1 µm to about 30 µm, about 0.5 µm to about 20 µm, or about 1 µm to about 10 µm. Thickness T52 of the porous covering layer may be 90 % or less, 70% % or less, 50 % or less, 30 % or less, 20 % or less, or 10 % or less, with respect to thickness T51 of the porous cushioning layer. If (e.g., when) the thickness T53 of the porous covering layer is too large, energy density of the all-solid secondary battery 1 may decrease; and if (e.g., when) the thickness T53 of the porous covering layer is too small, the porous cushioning layer 52 may pass through the porous covering layer 53, causing the effect of the porous covering layer 53 to be insignificant.

The porous covering layer 53 may have an air permeability of, for example, 1,000 sec/100 cc or less, 500 sec/100 cc or less, or 200 sec/100 cc or less. The porous covering layer 53 may have an air permeability of, for example, about 10 sec/100 cc to about 1,000 sec/100 cc, about 50 sec/100 cc to about 500 sec/100 cc, or about 100 sec/100 cc to about 200 sec/100 cc. Air permeability may be measured as Gurley values. The Gurley values may be measured by a method in accordance with JIS P8117. As the porous covering layer 53 has an air permeability within the above ranges, the formation of air pockets between the porous multilayer member 51 and the electrode assembly 40 may be more effectively prevented or reduced, while mechanical strength of the porous covering layer 53 is more effectively maintained.

The porous covering layer 53 may have a porosity of, for example, about 5 % to about 95 %, about 10 % to about 90%, about 20 % to about 80 %, about 30 % to about 70%, or about 35 % to about 55 %. As the porous covering layer 53 has a porosity within the above ranges, the formation of air pockets between the porous multilayer member 51 and the electrode assembly 40 may be more effectively prevented or reduced, while durability of the porous multilayer member 51 is more effectively maintained. The porosity may be calculated from the volume and weight of the porous covering layer 53, and the density of materials constituting the porous covering layer. In one or more embodiments, the porosity of the porous covering layer may be measured by a liquid or gas adsorption method based on ASTM D-2873.

The size of pores included in the porous covering layer 53 may be, for example, about 0.01 µm to about 20 µm, about 0.01 µm to about 10 µm, about 0.01 µm to about 1 µm, or about 0.01 µm to about 0.5 µm. The size of pores may be an average pore size. As the porous covering layer 53 has a pore size within the above ranges, the formation of air pockets between the porous multilayer member 51 and the electrode assembly 40 may be more effectively prevented or reduced, while mechanical strength of the second protecting layer 50 is more effectively maintained. The size of pores may be measured by, for example, a nitrogen adsorption method. The size of pore may be determined from scanning electron microscopic (SEM) images, by utilizing a mercury porosimeter or capillary flow porosimeter, or through the BET6-point method based on nitrogen gas adsorption flow utilizing a porosimetry analyzer (*e.g.,* Belsorp-II mini, Bell Japan Inc.).

The porous covering layer 53 may include, for example, a polyolefin-based polymer, a cellulose-based polymer, or a combination thereof.

For example, the polyolefin-based polymer may be a homopolymer, e.g., polyethylene and polypropylene, a copolymer, or a mixture thereof. The polyethylene may be a low-density polyethylene, a medium-density polyethylene, or a high-density polyethylene, and for mechanical strength, a high-density polyethylene may be utilized. Further, a mixture of two or more types (kinds) of polyethylenes may be utilized to impart flexibility. To achieve both (e.g., simultaneously) mechanical strength and high permeability, the polyethylene may have a weight average molecular weight of about 100,000 Dalton to about 12,000,000 Dalton, or about 200,000 Dalton to about 3,000,000 Dalton. The polypropylene may be a homopolymer, a random copolymer, or a block copolymer, and a single one of the aforementioned examples, or a mixture of two or more thereof may be utilized. The tacticity of the polypropylene is also not particularly limited, and the polypropylene may be isotactic, syndiotactic, or atactic. For example, an inexpensive isotactic polypropylene may be utilized. In the polyolefin, a polyolefin other than polyethylene and polypropylene, and additives such as an antioxidant may be added. The porous covering layer 53 may include, for example, a polyolefin such as polyethylene, polypropylene, and/or the like, and may have a multilayer structure having two or more layers. The porous covering layer 53 may have a mixed multilayer structure, such as a polyethylene/polypropylene two-layer structure, a polyethylene/polypropylene/polyethylene three-layer structure, a polypropylene/polyethylene/polypropylene three-layer structure, and/or the like. However, the porous covering layer 53 is not limited to the aforementioned examples and may utilize any suitable material and configuration available in the art.

The cellulose-based polymer may include, for example, a plant-based cellulose polymer, an animal-based cellulose polymer, a microbial or bacterial cellulose-based polymer, or a combination thereof.

The porous covering layer 53 may be, for example, a porous film. The porous film may be, for example, a woven or non-woven fabric. The porous film may be prepared by, for example, a wet method or a dry method. In the wet method, the porous film may be prepared by removal of the good or suitable solvent and the non-solvent from a composition containing a polymer, the good or suitable solvent, and the non-solvent. In the dry method, the porous film may be prepared by stretching a polymer film in the machine direction (MD) and/or the transverse direction (TD). Stretching of the polymer film may be carried out in a solvent vapor atmosphere, for example.

The porous covering layer 53 may include a porous film, and the porous film may include, for example, a cellulose-based polymer. The porous film may include, for example, cellulose nanofibers. The cellulose nanofibers included in the porous film may include, for example, microbial cellulose or bacterial cellulose nanofibers, wood cellulose nanofibers, and/or the like. The microbial cellulose or bacterial cellulose nanofibers may be obtained directly from a bacterial culture medium as a fermentation product of the bacterial culture medium. For example, carboxyl group-containing cellulose nanofibers included in the porous film may be carboxyl group-containing microbial or bacterial cellulose nanofibers. For example, the carboxyl group-containing microbial or bacterial cellulose nanofibers may be obtained directly from a bacterial culture medium as a fermentation product of the bacterial culture medium. Therefore, the carboxyl group-containing microbial or bacterial cellulose nanofibers included in the porous film may be distinguished from a mixture of common microbial or bacterial cellulose nanofibers in the related art and a carboxyl group-containing compound. The wood cellulose nanofibers may be obtained by disintegration of wood-based materials. The cellulose nanofibers included in the porous film may have an average diameter of 100 nm or less, 50 nm or less, or 25 nm or less. For example, the cellulose nanofibers included in the porous film may have an average diameter of about 1 nm to about 100 nm, about 1 nm to about 50 nm, or about 5 nm to about 45 nm. As the porous film includes cellulose nanofibers having an average diameter in the above ranges, the porous film may have improved tensile strength. The thermal shrinkage of the porous film after 30 minutes exposure at 150 °C may be 5 % or less, 3 % or less, or 1 % or less. Because the porous film provides excellent or suitable thermal stability at a high temperature of 150 °C or more, thermal resistance of the all-solid secondary battery 1 and the porous multilayer member 51 including the porous film may be improved.

The porous covering layer 53 may include a porous film, and the porous film may have, for example, a monolayer or multilayer structure. The porous film may have a monolayer or multilayer structure according to conditions desired for and/or required of the porous multilayer member. The porous film may be a non-adhesive film.

### Anode Layer: Anode Current Collector

The anode current collector 21, 21a, 21b may be formed of a material that does not react with lithium, that is, does not form an alloy or a compound with lithium. The material forming the anode current collector 21, 21a, 21b may be, for example, copper (Cu), stainless steel (SUS), titanium (Ti), iron (Fe), cobalt (Co), nickel (Ni), and/or the like, but the present disclosure is not limited to the aforementioned examples, and may utilize any suitable material that is utilized as an electrode current collector in the art. The anode current collector 21, 21a, 21b may be formed of one of the aforementioned metals, an alloy of two or more metals thereof, or a covering material. The anode current collector 21, 21a, 21b may be, for example, a plate type or kind or a foil type or kind.

The anode current collector 21, 21a, 21b may further include, for example, a thin film containing an element capable of forming an alloy with lithium on the anode current collector 21, 21a, 21b. The thin film may be positioned between the anode current collector 21, 21a, 21b and the anode active material layer 22, 22a, 22b. The thin film may include, for example, an element capable of forming an alloy with lithium. Examples of the element capable of forming an alloy with lithium may include gold, silver, zinc, tin, indium, silicon, aluminum, bismuth, and/or the like, but the present disclosure is not limited thereto, and any suitable element available in the art that is capable of forming an alloy with lithium may be utilized. The thin film may include (e.g., consist of) one of the aforementioned metals, or may include (e.g., consist of) an alloy of different types (kinds) of metals. If (e.g., when) the thin film is disposed on the anode current collector 21, 21a, 21b, for example, a plated form of a second anode active material layer being plated between the thin film and the first anode active material layer 22, 22a, 22b may be further flattened, and cycling performance of the all-solid secondary battery 1 may further improve. The thin film may be disposed between the first protecting layer 23, 23a, 23b and the first anode active material layer 22, 22a, 22b, for example, or may be disposed between the first protecting layer 23, 23a, 23b and the anode current collector 21, 21a, 21b.
For example, the thin film may have a thickness of about 1 nm to about 800 nm, about 10 nm to about 500 nm, or about 50 nm to about 100 nm. If (*e.g.,* when) the thickness of the thin film is less than 1 nm, it may be difficult to achieve functions attributable to the thin film. If (*e.g.,* when) the thickness of the thin film is excessively large, the thin film itself exhibits irreversible lithium intercalation, and therefore, the amount of lithium plated at the anode layer 20, 20a, 20b may decrease. Consequently, the actual energy density of the lithium secondary battery 1 may deteriorate and cycling performance of the lithium secondary battery 1 may deteriorate. The thin film may be disposed on the anode current collectors 21, 21a, 21b by a method such as a vacuum deposition method, a sputtering method, and/or a plating method. However, the present disclosure is not limited to the aforementioned methods, and any suitable method available in the art that is capable of forming a thin film may be utilized.

For example, the anode current collector 21, 21a, 21b may include a base film, and a metal layer disposed on one surface or both (e.g., opposite) surfaces of the base film. The base film may include, for example, a polymer. The polymer may be, for example, a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. Because the base film includes an insulating thermoplastic polymer, the base film is softened or liquefied to block or reduce the operation of a battery in the case of occurrence of a short circuit, so that a rapid current increase may be inhibited or reduced. The metal layer may include, for example, copper (Cu), stainless steel, titanium (Ti), iron (Fe), cobalt (Co), nickel (Ni), or an alloy thereof. The anode current collector 21 may further include a metal chip and/or a lead tab. For more detailed descriptions of the base film, the metal layer, the metal chip, and the lead tab of the anode current collector 21, refer to the descriptions of the cathode current collector 11. As the anode current collector 21, 21a, 21b has such a structure, the weight of the electrode may be reduced, and as a result, an energy density of the all-solid secondary battery may improve.

### Anode Layer: Anode Active Material

Referring to FIGs. 1 to 5, the anode layer 20, 20a, 20b may include an anode current collector 21, 21a, 21b; and a first anode active material layer 22, 22a, 22b disposed on the anode current collector 21, 21a, 21b. For example, the first anode active material layer 22, 22a, 22b may include an anode active material.

The anode active material included in the first anode active material layer 22, 22a, 22b may include, for example, at least one of (e.g., at least one selected from) a carbon-based anode active material and/or a metal-based anode active material. The metal-based anode active material forms an alloy or compound with lithium.

The carbon-based anode active material may be, for example, an amorphous carbon. Examples of the amorphous carbon may include carbon black (CB), acetylene black (AB), furnace black (FB), Ketjen black (KB), graphene, and/or the like; however, the carbon-based anode active material is not necessarily limited to the aforementioned examples and may be any suitable material categorized as amorphous carbon in the art. Amorphous carbon is carbon with no crystalline structure or an extremely low degree of crystallinity and as such, may be distinguished from crystalline carbon or graphitic carbon.

The metal-based anode active material, i.e., the anode active material forming an alloy or compound with lithium, may include at least one alloy-forming element of (*e.g.,* at least one alloy-forming element selected from) gold (Au), platinum (Pt), palladium (Pd), silicon (Si), silver (Ag), aluminum (Al), bismuth (Bi), tin (Sn), and/or zinc (Zn), but the present disclosure is not necessarily limited thereto, and may utilize any suitable anode active material available in the art that forms an alloy or a compound with lithium. For example, nickel (Ni) does not form an alloy with lithium, and therefore is not an anode active material forming an alloy or compound with lithium.

Among the above anode active materials, the first anode active material layer 22, 22a, 22b may include a single anode active material, or may include a mixture of multiple different types (kinds) of anode active materials. For example, the first anode active material layer 22, 22a, 22b may include amorphous carbon alone, or may include one or more metals of (*e.g.,* one or more metals selected from) gold (Au), platinum (Pt), palladium (Pd), silicon (Si), silver (Ag), aluminum (Al), bismuth (Bi), tin (Sn), and/or zinc (Zn). In one or more embodiments, the first anode active material layer 22, 22a, 22b may include a mixture of amorphous carbon and one or more metals of (*e.g*., one or more metals selected from gold (Au), platinum (Pt), palladium (Pd), silicon (Si), silver (Ag), aluminum (Al), bismuth (Bi), tin (Sn), and/or zinc (Zn). The mixing ratio of amorphous carbon to the metal(s) described herein, such as gold (Au), in such a mixture may be about 10:1 to about 1:2, about 5:1 to about 1:1, or about 4:1 to about 2:1 in weight ratio, but the present disclosure is not necessarily limited to these ranges, and the mixing ratio may be selected according to desired or required characteristics of an all-solid secondary battery 1. As the anode active material has the above compositions, cycling performance of the all-solid secondary battery 1 may further improve.

The anode active material included in the first anode active material layer 22, 22a, 22b may have, for example, a particulate form. The anode active material having a particulate form may have a particle diameter of, for example, 4 µm or less, 3 µm or less, 2 µm or less, 1 µm or less, or 500 nm or less. The particle diameter of the anode active material having a particulate form may be, for example, from about 10 nm to about 4 µm, about 10 nm to about 3 µm, about 10 nm to about 2 µm, about 10 nm to about 1 µm, or about 10 nm to about 500 nm. If (*e.g.,* when) the anode active material has a particle diameter within the above ranges, reversible absorption and/or desorption of lithium during cycling may be further facilitated. The particle diameter of the anode active material may be, for example, a median particle diameter (D50) as measured by a laser-type or kind particle size distribution analyzer.

The anode active material included in the first anode active material layer 22, 22a, 22b may include, for example, a mixture of first particles composed of amorphous carbon and second particles composed of a metal. Examples of the metal may include gold (Au), platinum (Pt), palladium (Pd), silicon (Si), silver (Ag), aluminum (Al), bismuth (Bi), tin (Sn), zinc (Zn), and/or the like. The content (e.g., amount) of the second particles may be about 8 wt% to about 60 wt%, about 10 wt% to about 50 wt%, about 15 wt% to about 40 wt%, or about 20 wt% to about 30 wt%, with respect to the total weight of the mixture. As the content (e.g., amount) of the second particles is within the above ranges, a cycling performance of the all-solid secondary battery 1 may further improve.

### Anode Layer: Binder

Referring to FIGs. 1 to 5, the first anode active material layer 22, 22a, 22b may further include a binder. The first anode active material layer 22, 22a, 22b may include, for example, an anode active material and a binder.

The binder included in the first anode active material layer 22, 22a, 22b may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any suitable material available as a binder in the art. The binder may be composed of a single type or kind of binder, or multiple binders of different types (kinds).

As the first anode active material layer 22, 22a, 22b may include a binder, the first anode active material layer 22, 22a, 22b may be stabilized on the anode current collector 21, 21a, 21b. Further, crack formation in the first anode active material layer 22, 22a, 22b may be suppressed or reduced, despite volume changes and/or displacement of the first anode active material layer 22, 22a, 22b during charging and discharging processes. For example, if (*e.g.,* when) the first anode active material layer 22, 22a, 22b does not contain any binder, the first anode active material layer 22, 22a, 22b may be easily delaminated from the anode current collector 21, 21a, 21b. At an area where the anode current collector 21, 21a, 21b is exposed as a result of delamination of the first anode active material layer 22, 22a, 22b from the anode current collector 21, 21a, 21b, the anode current collector 21, 21a, 21b may come in contact with the solid electrolyte layer 30, 30aa, 30b, thus increasing the likelihood of a short circuit. For example, the first anode active material layer 22, 22a, 22b may be prepared by applying and drying a slurry having dispersed therein materials forming the first anode active material layer 22, 22a, 22b on the anode current collector 21, 21a, 21b. By including a binder in the first anode active material layer 22, 22a, 22b, stable dispersion of the anode active materials within the slurry may be achieved. For example, when applying the slurry onto the anode current collector 21, 21a, 21b by a screen-printing method, it may be possible to prevent or reduce the screen from clogging (for example, clogging by agglomerates of the anode active material).

### Anode Layer: Other Additives

The first anode active material layer 22, 22a, 22b may further include other additives utilized in an all-solid secondary battery of the related art, such as a filler, a coating agent, a dispersing agent, an ionically conductive aid, and/or the like.

### Anode Layer: First Anode Active Material Layer

For example, the first anode active material layer 22, 22a, 22b may have a thickness of 50% or less, 40% or less, 30% or less, 20% or less, 10% or less, or 5% or less, with respect to the thickness of the cathode active material layer 12, 12a, 12b. For example, the first anode active material layer 22, 22a, 22b may have a thickness of about 1 µm to about 20 µm, about 2 µm to about 10 µm, or about 3 µm to about 7 µm. If (e.g., when) the first anode active material layer 22, 22a, 22b is excessively thin, lithium dendrites may form between the first anode active material layer 22, 22a, 22b and the anode current collector 21, 21a, 21b and may cause the first anode active material layer 22, 22a, 22b to disintegrate, thus making it difficult to achieve improved cycling performance of the all-solid secondary battery 1. If (*e.g.,* when) the first anode active material layer 22, 22a, 22b is excessively thick, the energy density of the all-solid secondary battery 1 may decrease, and the internal resistance of the all-solid secondary battery 1 by the first anode active material layer 22, 22a, 22b may increase, thus making it difficult to achieve improved cycling performance of the all-solid secondary battery 1.

With decreasing thickness of the first anode active material layer 22, 22a, 22b, for example, charge capacity of the first anode active material layer 22, 22a, 22b may also decrease. The charge capacity of the first anode active material layer 22, 22a, 22b may be, for example, 50% or less, 40% or less, 30% or less, 20% or less, 10% or less, 5% or less, or 2% or less, with respect to the charge capacity of the cathode active material layer 12, 12a, 12b. The charge capacity of the first anode active material layer 22, 22a, 22b may be, for example, about 0.1% to about 50%, about 0.1% to about 40%, about 0.1% to about 30%, about 0.1% to about 20%, about 0.1% to about 10%, about 0.1% to about 5%, or about 0.1% to about 2%, with respect to the charge capacity of the cathode active material layer 12, 12a, 12b. If (e.g., when) the charge capacity of the first anode active material layer 22, 22a, 22b is excessively small, the thickness of the first anode active material layer 22, 22a, 22b becomes extremely small, and as a result, lithium dendrites may form between the first anode active material layer 22, 22a, 22b and the anode current collector 21, 21a, 21b during repeated charging and discharging processes and may cause disintegration of the first anode active material layer 22, 22a, 22b, thus making it difficult to achieve improved cycling performance of the all-solid secondary battery 1. If (*e.g.,* when) the charge capacity of the first anode active material layer 22, 22a, 22b is excessively large, the energy density of the all-solid secondary battery 1 may decrease, and the internal resistance of the all-solid secondary battery 1 by the first anode active material layer 22, 22a, 22b may increase, thus making it difficult to achieve improved cycling performance of the all-solid secondary battery 1. The ratio (C1/C2) of charge capacity C1 of the first anode active material layer 22, 22a, 22b to charge capacity C2 of the cathode active material layer 12, 12a, 12b may be, for example, about 0.001 to about 0.45, about 0.001 to about 0.4, about 0.001 to about 0.3, about 0.001 to about 0.3, about 0.001 to about 0.2, about 0.001 to about 0.1, about 0.001 to about 0.05, or about 0.001 to about 0.02.

The charge capacity of the cathode active material layer 12, 12a, 12b may be obtained by multiplying the charge specific density (mAh/g) of the cathode active material by the mass of the cathode active material in the cathode active material layer 12, 12a, 12b. If (*e.g.,* when) multiple types (kinds) of cathode active materials are utilized, the product of charge specific density × mass may be calculated for each cathode active material, and the sum of these products may be defined as the charge capacity of the cathode active material layer 12, 12a, 12b. Charge capacity of the first anode active material layer 22, 22a, 22b may also be calculated in substantially the same manner. For example, the charge capacity of the first anode active material layer 22, 22a, 22b may be obtained by multiplying the charge specific density (mAh/g) of the anode active material by the mass of the anode active material in the first anode active material layer 22, 22a, 22b. If (*e.g.,* when) multiple types (kinds) of anode active materials are utilized, the product of charge specific density × mass may be calculated for each anode active material, and the sum of these products may be defined as the capacity of the first anode active material layer 22, 22a, 22b. Here, the charge specific density of the cathode active material and the anode active material are capacities estimated utilizing an all-solid half cell that uses lithium metal as counter electrode. By the charge capacity measurement utilizing an all-solid half cell, charge capacities of the cathode active material layer and the anode active material layer may be directly measured. Charge specific density may be obtained by dividing the measured charge capacity by the mass of each active material. In one or more embodiments, the charge capacity of the cathode active material layer 12, 12a, 12b and the anode active material layer 22, 22a, 22b may be an initial charge capacity measured during charging in the first cycle.

### Anode Layer: Second Anode Active Material Layer

The all-solid secondary battery 1 may further include, by charging, a second anode active material layer disposed between the anode current collector 21, 21a, 21b and the first anode active material layer 22, 22a, 22b, for example. The second anode active material layer may be a metal layer including lithium or a lithium alloy. The metal layer may include lithium or a lithium alloy. As such, the second anode active material layer, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but the present disclosure is not limited thereto, and may include any suitable material available as a lithium alloy in the art. The second anode active material layer may be composed of one of such alloys, or lithium, or may be composed of one or more suitable types (kinds) of such alloys. The second anode active material layer may be, for example, a plated layer. For example, the second anode active material layer may be plated between the first anode active material layer 22, 22a, 22b and the anode current collector 21, 21a, 21b during a charging process of the all-solid secondary battery 1.

The second anode active material layer is not limited to any particular thickness, but may have a thickness of, for example, about 1 µm to about 200 µm, about 1 µm to about 150 µm, about 1 µm to about 100 µm, or about 1 µm to about 50 µm. If (*e.g.,* when) the thickness of the second anode active material layer is excessively small, the second anode active material layer may fail to sufficiently function as a lithium reservoir. If (*e.g.,* when) the thickness of the second anode active material layer is too large, the mass and volume of the all-solid secondary battery 1 may increase, and cycling performance thereof may deteriorate. The second anode active material layer may be, for example, a metal foil having a thickness in the above ranges.

In the all-solid secondary battery 1, the second anode active material layer may be, for example, positioned between the anode current collector 21, 21a, 21b and the first anode active material layer 22, 22a, 22b before assembly of the all-solid secondary battery 1, or plated between the anode current collector 21, 21a, 21b and the first anode active material layer 22, 22a, 22b by charging after assembly of the all-solid secondary battery 1. In one or more embodiments in which the second anode active material layer 22, 22a, 22b is positioned between the anode current collector 21, 21a, 21b and the first anode active material layer 22, 22a, 22b prior to assembly of the all-solid secondary battery 1, the second anode active material layer is a metal layer containing lithium and thus acts as a lithium reservoir. For example, prior to assembly of the all-solid secondary battery 1, a lithium foil may be positioned between the anode current collector 21, 21a, 21b and the first anode active material layer 22, 22a, 22b. Consequently, cycling performance of the all-solid secondary battery 1 including the second anode active material layer may be further improved. If (*e.g.,* when) the second anode active material layer is plated by charging after assembly of the all-solid secondary battery 1, the second anode active material layer is not included at the time of assembly of the all-solid secondary battery 1, and therefore, an energy density of the all-solid secondary battery 1 may increase. For example, when charging the all-solid secondary battery 1, the charging may be performed exceeding the charge capacity of the first anode active material layer 22, 22a, 22b. For example, the first anode active material layer 22, 22a ,22b may be overcharged. At the beginning of the charging, lithium may be absorbed into the first anode active material layer 22, 22a, 22b. The anode active material included in the first anode active material layer 22, 22a, 22b may form an alloy or a compound with lithium ions moved from the cathode layer 10. If (e.g., when) the charging is performed exceeding the capacity of the first anode active material layer 22, 22a, 22b, lithium may be plated, for example, on the back side of the first anode active material layer 22, 22a, 22b, *e.g.,* between the anode current collector 21, 21a, 21b and the first anode active material layer 22, 22a, 22b, and then a metal layer corresponding to the second anode active material layer may be formed by the plated lithium. The second anode active material layer may be a metal layer mainly composed of lithium (*i.e.,* lithium metal). This result may be attributed to the fact that the anode active material included in the first anode active material layer 22, 22a, 22b is composed of a material that forms an alloy or compound with lithium. During discharge, lithium of the first anode active material layer 22, 22a, 22b and the second anode active material layer, that is, a metal layer, is ionized and migrates toward the cathode layer 10. Therefore, lithium may be utilized as an anode active material in the all-solid secondary battery 1. In one or more embodiments, because the first anode active material layer 22, 22a, 22b is coated on the second anode active material layer, the first anode active material layer 22, 22a, 22b may function as a protective layer for the second anode active material layer, for example, the metal layer, while inhibiting precipitation and growth of lithium dendrites. Therefore, short circuiting and capacity fading in the all-solid secondary battery 1 may be inhibited, and consequently, cycling performance of the all-solid secondary battery 1 may improve. Further, when the second anode active material layer is to be disposed by charging after assembly of the all-solid secondary battery 1, the anode current collector 21, 21a, 21b, the first anode active material layer 22, 22a, 22b, and the region therebetween may be, for example, a Li-free region not containing lithium in the initial state or a discharged state of the all-solid secondary battery.

### Solid Electrolyte Layer

### Solid Electrolyte Layer: Solid Electrolyte

Referring to FIGs. 1 to 4, the solid electrolyte layer 30, 30a, 30b may be disposed between the cathode layer 10 and the anode layer 20, 20a, 20b. The solid electrolyte layer 30, 30a, 30b includes an electrolyte. The electrolyte may include, for example, a solid electrolyte, a gel electrolyte or a combination thereof. The solid electrolyte may include, for example, a sulfide-based solid electrolyte, an oxide-based solid electrolyte, a polymer solid electrolyte, or any combination thereof. The solid electrolyte layer 30, 30a, 30b may include a sulfide-based solid electrolyte.

For example, the sulfide-based solid electrolyte included in the solid electrolyte layer 30, 30a, 30b may be at least one of (*e.g.,* at least one selected from among) Li₂S-P₂S₅, Li₂S-P₂S₅-LiX wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ wherein m and n each are a positive number and Z is one of Ge, Zn or Ga, Li₂S-GeS₂, Li₂S-SiS₂-Li₃PO₄, Li₂S-SiS₂-LiₚMO_{q} (wherein p and q are a positive number and M is one of P, Si, Ge, B, Al, Ga, and In), Li₃PS₄, Li₇P₃S₁₁, Li₇₋ₓPS₆-ₓClₓ (0≤x≤2), Li₇₋ₓPS₆₋ₓBrₓ (0≤x≤2), and/or Li₇₋ₓPS₆₋ₓIₓ (0≤x≤2). The sulfide-based solid electrolyte may be prepared by treating starting materials, such as Li₂S and P₂S₅, by a method such as melt-quenching, mechanical milling, and/or the like. In one or more embodiments, following such a treatment, heat treatment may be conducted. The sulfide-based solid electrolyte may be amorphous or crystalline, or may be in a mixed state thereof. In one or more embodiments, the solid electrolyte may be, among the sulfide-based solid electrolyte materials described herein, a material that contains at least sulfur (S), phosphorus (P), and lithium (Li) as its constitutive elements. For example, the solid electrolyte may be a material including Li₂S-P₂S₅. If (*e.g.,* when) a material containing Li₂S-P₂S₅ is utilized as the sulfide-based solid electrolyte material constituting the solid electrolyte, the mixing molar ratio of Li₂S and P₂S₅ (Li₂S : P₂S₅) may be, for example, in a range of about 50:50 to about 90:10. For example, the sulfide-based solid electrolyte may include an argyrodite-type or kind solid electrolyte represented by Formula 1:

Formula 1 Li⁺₁₂₋ₙ₋ₓAⁿ⁺X²⁻₆₋ₓY⁻ₓ

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied. For example, the sulfide-based solid electrolyte may be an argyrodite-type or kind compound including one or more of (*e.g.,* one or more selected from) Li₇₋ₓPS₆-ₓClₓ wherein 0≤x≤2, Li₇₋ₓPS₆₋ₓBrₓ wherein 0≤x≤2, and/or Li₇₋ₓPS₆₋ₓIₓ wherein 0≤x≤2. For example, the sulfide-based solid electrolyte may be an argyrodite-type or kind compound including at least one of (*e.g.,* at least one selected from) Li₆PS₅Cl, Li₆PS₅Br, and/or LisPS₅I. The argyrodite-type or kind solid electrolyte may have a density of about 1.5 g/cc to about 2.0 g/cc. As the argyrodite-type or kind solid electrolyte has a density of 1.5 g/cc or more, internal resistance of the all-solid secondary battery may be reduced, and Li penetration to the solid electrolyte layer may be more effectively suppressed or reduced.

For example, the sulfide-based solid electrolyte may have an elastic modulus of 40 GPa or less. For example, the sulfide-based solid electrolyte may have an elastic modulus of about 5 GPa to about 40 GPa, about 10 GPa to about 40 GPa, or about 15 GPa to about 30 GPa.

The average particle diameter of sulfide-based solid electrolyte particles included in the solid electrolyte layer 30, 30a, 30b may be, for example, about 1 µm to about 50 µm, about 3 µm to about 30 µm, about 3 µm to about 20 µm. As the sulfide-based solid electrolyte particles have an average particle diameter in the above ranges, cycling performance of the all-solid secondary battery may further improve. The oxide-based solid electrolyte may include, for example, at least one of (*e.g*., at least one selected from) Li_{1+x+y}AlₓTi₂₋ₓSi_{y}P_{3-y}O₁₂ (where 0<x<2 and 0≤y<3), BaTiO₃, Pb(Zr,Ti)O₃ (PZT), Pb₁₋ₓLaₓZr_{1-y}Ti_{y}O₃ (PLZT, where 0≤x<1 and 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and/or Li₃₊ₓLa₃M₂O₁₂ (where M = Te, Nb, or Zr, 0≤x≤10). The solid electrolyte may be manufactured by a sintering method, and/or the like. For example, the oxide-based solid electrolyte may be a garnet-type or kind solid electrolyte including (*e.g.,* selected from) Li₇La₃Zr₂O₁₂ (LLZO) and/or Li₃₊ₓLa₃Zr₂₋ₐMₐO₁₂ (M doped LLZO, where M=Ga, W, Nb, Ta, or Al, 0<a<2, and 0≤x≤10).

The polymer solid electrolyte may include, for example, a mixture of a lithium salt and a polymer, or may include a polymer having an ion-conductive functional group. The polymer solid electrolyte may be, for example, a polymer electrolyte in a solid state at 25 °C and 1 atm. For example, the polymer solid electrolyte may not include (*e.g.,* may exclude) a (e.g., any) liquid (or be liquid-free, i.e., liquid is not added (or needed) for the proper operation of the electrolyte). The polymer solid electrolyte includes a polymer, and examples of the polymer include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, the present disclosure is not limited thereto, and any suitable polymer electrolytes generally available in the art may also be utilized. Any suitable lithium salts generally available in the art may also be utilized. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ+1SO₂)(C_{y}F_{2y}+1SO₂) (where x and y may each independently be from 1 to 20), LiCl, Lil, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton (Da) or more, 10,000 Da or more, 100,000 Da or more, or 1,000,000 Da or more.

The gel electrolyte may include, for example, a polymer gel electrolyte. For example, the gel electrolyte may have a gel state without including a polymer. The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be (*e.g.,* may be selected from) polymers utilized in the polymer solid electrolyte. The organic solvent may be (*e.g.,* may be selected from) organic solvents utilized in liquid electrolytes. The lithium salt may be (*e.g.,* may be selected from) lithium salts utilized in the polymer solid electrolyte. The ionic liquid refers to a salt in a liquid state, and a molten salt at room temperature composed solely of ions and having a melting point below room temperature. The ionic liquid may include, for example, at least one compound including: a) at least one cation of (*e.g.,* at least one cation selected from) ammonium, pyrimidium, pyridinium, pyrimidium, imidazolium, piperidinium, pyrazolium, oxazolium, pyridazinium, phosphonium, sulfonium, triazole, and/or any mixture thereof; and/or b) at least one anion (*e.g.,* at least one anion selected from) BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and/or (CF₃SO₂)₂N⁻. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

### Solid Electrolyte Layer: Binder

The solid electrolyte layer 30, 30a, 30b may further include, for example, a binder. Examples of the binder included in the solid electrolyte layer 30, 30a, 30b may include styrene butadiene rubber (SBR), polytetrafluoroethylene, polyvinylidene fluoride, polyethylene, and/or the like. However, the binder is not limited to the aforementioned examples and may be any suitable binder available in the art. The binder in the solid electrolyte layer 30, 30a, 30b may be substantially identical to or different from a binder included in the cathode active material layer 12, 12a, 12b and the anode active material layer 22, 22a, 22b. The binder may not be provided.

The binder included in the solid electrolyte layer may include, for example, a conductive binder and/or a non-conductive binder. Examples of a conductive binder may include ion-conductive binders and/or electron-conductive binders. Binders having both (e.g., simultaneously) ion conductivity and electron conductivity belong to both ion-conductive binders and electron-conductive binders. For details of the conductive binders, refer to the first protecting layer 23, 23a, and 23b above.

The binder included in the solid electrolyte layer 30, 30a, 30b may further include, for example, a first binder. The first binder may be, for example, a dry binder. The dry binder may be, for example, a binder that is not impregnated, dissolved or dispersed in a solvent. The dry binder may be, for example, a binder that does not contain or come into contact with a solvent.

The first binder may be, for example, a fibrillized binder. The fibrillized binder may serve as a fibrous matrix for supporting a plurality of inorganic particles and sulfide-based solid electrolyte particles included in the solid electrolyte layer and binding these particles together. The fibrous form of the fibrillized binder may be confirmed from, for example, a scanning electron microscopic image of a cross section of an electrode. The fibrillized binder may have an aspect ratio (*e.g.,* a ratio of the binder's height (*e.g.,* length) to width in a cross-sectional image of the solid electrolyte layer) of, for example, 10 or more, 20 or more, 50 or more, or 100 or more. The first binder may be, for example, polytetrafluoroethylene (PTFE), a polyvinylidene fluoride-hexapropylene (PVDF-HFP) copolymer, and/or the like; however, the present disclosure is not necessarily limited thereto, and the first binder may utilize any suitable fibrillized binder available for use in the preparation of dry compositions. The first binder may include a fluorine-based binder, for example. Examples of the fluorine-based binder may include polytetrafluoroethylene (PTFE).

The binder included in the solid electrolyte layer 30 may further include, for example, a second binder. The second binder may be, for example, a dry binder. The description of the dry binder is the same as in the description of the first binder above.

The second binder may be, for example, a non-fibrillized binder. The non-fibrillized binder may support sulfide-based solid electrolyte particles and inorganic particles included in the solid electrolyte layer and may serve as a binding site that binds these particles together. For example, a scanning electron microscopy image of a cross-section of an electrode may show that the non-fibrillized binder is disposed in a particulate form, not having a fibrillized form. The non-fibrillized binder may have an aspect ratio (*e.g.,* a ratio of the binder's height (*e.g.,* length) to width in a cross-sectional image of the solid electrolyte layer) of, for example, 5 or less, 3 or less, or 2 or less. Examples of the second binder may include polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), a fluororubber, or a copolymer thereof. However, the second binder is not necessarily limited to the aforementioned examples and may be any suitable binder available for use in the manufacturing of dry electrodes. For example, the second binder may include a fluorine-based binder. Examples of the fluorine-based binder may include polyvinylidene fluoride (PVDF).

The amount of the binder included in the solid electrolyte layer 30, 30a, 30b may be, for example, about 1 wt% to about 10 wt%, about 1 wt% to about 5 wt%, or about 1 wt% to about 3 wt% with respect to the total weight of the solid electrolyte layer. As the solid electrolyte layer includes the binder in an amount in the above ranges, the binding force of the solid electrolyte layer may improve, and the all-solid secondary battery may maintain high energy density.

The solid electrolyte layer 30, 30a, 30b may be, for example, a self-standing film. For example, the solid electrolyte layer may retain a film form without a support. Therefore, the solid electrolyte layer may be separately prepared as a self-standing film, and then disposed between the cathode layer and the anode layer. For example, the solid electrolyte layer may be free of residual processing solvent. For example, because the solid electrolyte layer is prepared by a dry method, the solid electrolyte layer may not contain any processing solvent deliberately added. For example, the solid electrolyte layer may contain no residual processing solvent. There may be a trace amount of solvent incidentally remaining in the solid electrolyte layer; however, this is not considered as a processing solvent deliberately added. As such, the solid electrolyte layer may be distinguished from a solid electrolyte layer that is prepared by a wet method, by mixing sulfide-based solid electrolyte particles and a processing solvent, and then completely or partially removing the processing solvent through drying.

### Cathode Layer

### Cathode Layer: Inactive Members

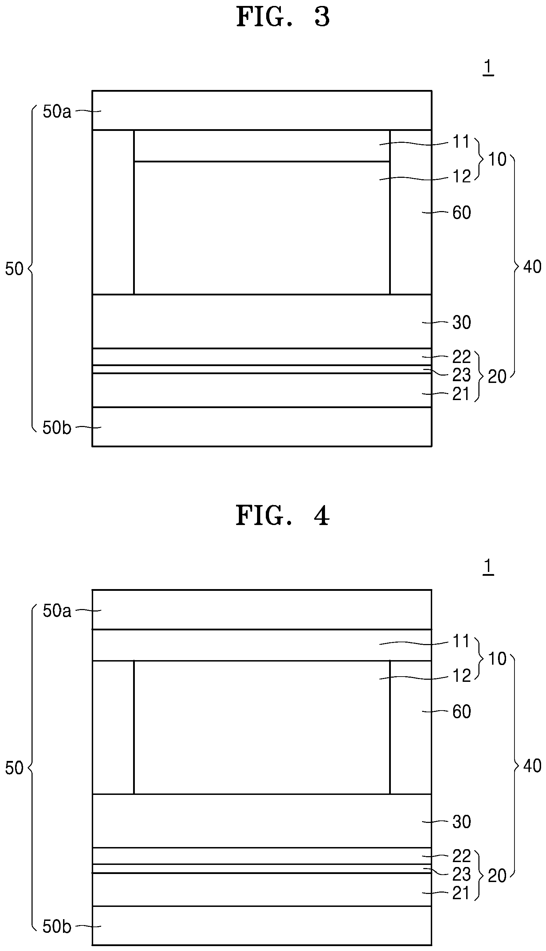

Referring to FIGs. 3 to 5, the cathode layer 10 may include a cathode current collector 11 and a cathode active material layer 12, 12a, 12b disposed on one surface of the cathode current collector 11, and may further include inactive members 60, 60a, 60b disposed on at least one side surface of the cathode layer 10.

Inclusion of the inactive member 60 may serve to prevent or reduce crack formation in the solid electrolyte layer 30, 30a, 30b when manufacturing and/or during charging/discharging the all-solid secondary battery 1, and may consequently improve cycling performance of the all-solid secondary battery 1. In an all-solid secondary battery 1 not including the inactive member 60, as a substantially non-uniform pressure is applied to the solid electrolyte layer 30, 30a, 30b, which is in contact with the cathode layer 10, during manufacturing and/or charging and discharging of the all-solid secondary battery 1, the solid electrolyte layer 30, 30a, 30b may crack, giving rise to the growth of lithium metal dendrites and increasing the likelihood of a short circuit.

The inactive member 60, 60a, 60b may be contiguous with the solid electrolyte layer 30, 30a, 30b while around (*e.g.,* surrounding) a side surface of the cathode 10, in part or in whole. As the inactive member 60, 60a, 60b is in contact with the solid electrolyte layer 30, 30a, 30b while around (*e.g.,* surrounding) a side surface of the cathode 10, in the solid electrolyte layer 30, 30a, 30b that is in contact with the cathode layer 10, cracking of the solid electrolyte layer 30, 30a, 30b caused by a pressure difference during the press process may be effectively prevented or reduced. The inactive member 60, 60a, 60b, while around (*e.g.,* surrounding) a side surface of the cathode layer 10, may be separated from the anode layer 20, 20a, 20b, for example, from an anode active material layer 22, 22a, 22b. The inactive member 60 may be contiguous with the solid electrolyte layer 30, 30a, 30b while around (e.g., surrounding) a side surface of the cathode layer 10, and may be apart from the anode 20, 20a, 20b. Accordingly, the risk of short circuiting due to the cathode layer 10 and the anode active material layer 22, 22a, 22b coming into physical contact with each other, or overcharging of lithium, etc. may be reduced.

Referring to FIG. 3, as the inactive member 60 is concurrently (e.g., simultaneously) disposed on one side surface of the cathode active material layer 12 and one side surface of the cathode current collector 11, the risk of short circuiting due to the cathode current collector 11 and the anode layer 20 coming into contact may be effectively inhibited or reduced. In one or more embodiments, as shown in FIG. 4, an inactive member 60 may be disposed on one side surface of a cathode active material layer 12 and disposed between a solid electrolyte layer 40 and a cathode current collector 11 facing the solid electrolyte layer 40. The inactive member 60 may not be disposed on one side surface of the cathode current collector 11. As the inactive member 60 is placed between the cathode current collector 11 and the solid electrolyte layer 40, the risk of short circuiting due to the cathode current collector 11 and the anode layer 20 coming into contact with each other may be effectively prevented or reduced.

Referring to FIGs. 3 and 4, the inactive member 60 may extend from one side surface of a cathode layer 10 to an end portion of the solid electrolyte layer 30. As the inactive member 60 extends to the end portion of the solid electrolyte layer 30, formation of cracks at the end portion of the solid electrolyte layer 30 may be inhibited. The end portion of the solid electrolyte layer 30 may be an outermost portion that is contiguous with a side surface of the solid electrolyte layer 30. The inactive member 60 may extend up to the outermost portion that is contiguous with the side surface of the solid electrolyte layer 30. The inactive member 60 may be apart from the anode layer 20, for example, from the first anode active material layer 22. The inactive member 60 may extend to the end portion of the solid electrolyte layer 30 and not come in contact with the anode layer 20. For example, the inactive member 60 may fill the space that extends from one side surface of the cathode layer 30 to the end portion of the solid electrolyte layer 30. The inactive member 60 may further include a positioning portion (not shown) configured to determine the position of the inactive member 30 on the solid electrolyte layer 30. Since the inactive member 30 further includes the positioning portion (not shown), the process of placing the inactive member 60 on the solid electrolyte layer 30 can be performed more easily. Thus, the manufacturing efficiency of the all-solid-state secondary battery 1 can be improved. The positioning portion may be, for example, an uneven surface region (e.g., a surface region with dented portion and/or protruded portion) disposed at a specific location on the inert member 60.

The inactive member 60, 60a, 60b may be, for example, a gasket. Using a gasket as the inactive member 60, 60a, 60b may effectively inhibit crack formation in the solid electrolyte layer 30, 30a, 30b due to a pressure differential during the press process.

The inactive member 60, 60a, 60b may have, for example, a monolayer structure. In one or more embodiments, the inactive member 60, 60a, 60b may have a multilayer structure. In an inactive member 60, 60a, 60b having a multilayer structure, each layer may have a different composition. The inactive member 60, 60a, 60b having a multilayer structure may have, for example, a two-layer structure, a three-layer structure, a four-layer structure, or a five-layer structure. The inactive member 60, 60a, 60b having a multilayer structure may include, for example, one or more adhesive layers and one or more support layers. The adhesive layers may effectively prevent or reduce, for example, separation between the cathode layer 10 and the solid electrolyte layer 30, 30a, 30b due to volume changes of the cathode layer 10 that occur during charging and discharging of the cathode layer 10 and may improve film strength of the inactive member 60, 60a, 60b by providing adhesion between the support layer and other layers. The support layer may provide support to the first inactive member 60, 60a, 60b, prevent or reduce non-uniformity of the pressure exerted on the solid electrolyte layer 30, 30a, 30b during the press process or charge/discharge processes, and inhibit or reduce shape deformation of the all-solid secondary battery 1 being manufactured.

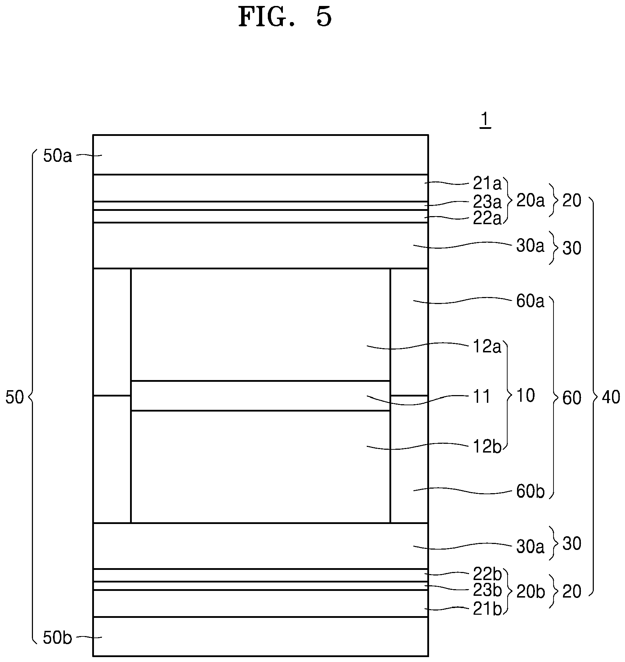

Referring to FIG. 5, an all-solid secondary battery 1 may include a cathode layer 10, an anode 20, and solid electrolyte layers 30, 30a, 30b disposed therebetween, wherein the cathode layer 10 may include a cathode current collector 11, and a first cathode active material layer 12a and a second cathode active material layer 12b, which are respectively provided on both sides of the cathode current collector 11, the solid electrolyte layer 30 may include the first solid electrolyte layer 30a contiguous with the first cathode active material layer 12a, and the second solid electrolyte layer 30b contiguous with the second anode active material layer 12b, and the anode layer 20 may include a first anode layer 20a contiguous with the first solid electrolyte layer 30a and a second anode layer 20b contiguous with the second solid electrolyte layer 30b, wherein a first inactive member 60 may be disposed between the first solid electrolyte layer 30a and the second solid electrolyte layer 30b while around (e.g., surrounding) a side surface of the cathode layer 10. The first inactive member 60 may include, for example, a first inactive member 60a contiguous with the first solid electrolyte layer 30a and a first inactive member 60b contiguous with the second solid electrolyte layer 30b. Thus, the all-solid secondary battery 1 may have a bi-cell structure. Because in such a bi-cell structure of the all-solid secondary battery 1, the solid electrolyte layer 30 and the anode layer 20 are symmetrically arranged facing each other about the cathode layer 10, structural deformation and/or the like, of the all-solid secondary battery 1 due to a pressure applied during the manufacture of the all-solid secondary battery 1 may be more effectively suppressed or reduced. Therefore, crack formation in the solid electrolyte layer 30 during the manufacturing process and/or charging and discharging processes of the all-solid secondary battery 1 may be suppressed or reduced, and as a result, short-circuiting of the all-solid secondary battery 1 may be prevented or reduced and cycling performance of the all-solid secondary battery 1 may further improve. Furthermore, because only one cathode current collector 11 is utilized for a plurality of cathode active material layers 12a, 12b, the energy density of the all-solid secondary battery 1 may increase.

Referring to FIGs. 3 to 5, the inactive member 60, 60a, 60b may be, for example, a flame-retardant inactive member. Flame retardancy provided by the flame-retardant inactive member may reduce the risk of thermal runaway and an explosion of the all-solid secondary battery 1. Consequently, the safety of the all-solid secondary battery 1 may further improve. As the flame-retardant inactive member absorbs residual moisture inside the all-solid secondary battery 1, degradation of the all-solid secondary battery 1 may be prevented or reduced, improving the lifetime characteristics of the all-solid secondary battery 1.

The flame-retardant inactive member may include, for example, a matrix and a filler. For example, the matrix may include a substrate and a reinforcing material. For example, the matrix may include a fibrous substrate and a fibrous reinforcing material. As the matrix includes the substrate, the matrix may have elasticity. Accordingly, the matrix may be placed at one or more suitable locations and effectively accommodate volume changes of the all-solid secondary battery 1 during charging and discharging. The substrate included in the matrix may include, for example, a first fibrous material. As the substrate includes the first fibrous material, volume changes of a cathode layer 10 during charging and discharging of an all-solid secondary battery 1 may be effectively accommodated, and deformation of an inactive member 60, 60a, 60b attributable to volume changes of the cathode layer 10 may be effectively inhibited or reduced. For example, the first fibrous material may be a material having an aspect ratio (*e.g*., a ratio of the material's width to height (*e.g*., length) in a cross-sectional image of the material) of 5 or more, 20 or more, or 50 or more. For example, the first fibrous material may be a material having an aspect ratio of about 5 to about 1,000, about 20 to about 1,000, or about 50 to about 1,000. For example, the first fibrous material may be an insulating material. As the first fibrous material is an insulating material, a short circuit that may occur between the solid electrolyte layer 30, 30a, 30b and the anode layer 20, 20a, 20b during charging/discharging due to lithium dendrites and/or the like, may be effectively prevented or reduced. Examples of the first fibrous material may include at least one of (*e.g*., at least one selected from among) pulp fibers, insulating polymer fibers, and/or ionically conductive polymer fibers. As the matrix includes the reinforcing material, strength of the matrix may improve. Accordingly, the matrix may serve to prevent or reduce the all-solid secondary battery 1 from undergoing an excessive volume change during charging and discharging and protect the all-solid secondary battery from deformation. The reinforcing material included in the matrix may include, for example, a second fibrous material. As the reinforcing material includes the second fibrous material, a more substantially uniform increase in the strength of the matrix may be achieved. For example, the second fibrous material may be a material having an aspect ratio of 3 or more, 5 or more, or 10 or more. For example, the first fibrous material may be a material having an aspect ratio of about 3 to about 100, about 5 to about 100, or about 10 to about 100. For example, the second fibrous material may be a flame-retardant material. As the second fibrous material is a flame-retardant material, effective suppression or reduction of a fire by thermal runaway that may occur during charging and discharging of the all-solid secondary battery 1 or by an external impact may be achieved. For example, the second fibrous material may be glass fibers, metal oxide fibers, ceramic fibers, and/or the like.

The flame-retardant inactive member may include a filler in addition to the matrix. The filler may be disposed inside the matrix, may be disposed on a surface of the matrix, or may be disposed both inside and on a surface of the matrix. Examples of the filler may include an inorganic material. The filler included in the flame-retardant inactive member may be for example, a moisture getter. For example, the filler may remove residual moisture from the all-solid secondary battery 1 by adsorbing to moisture at a temperature of less than 100 °C, thereby preventing or reducing degradation of the all-solid secondary battery 1. Further, in a case in which the temperature of the all-solid secondary battery 1 increases to 150 °C or higher due to thermal runaway caused by an external impact or during charging and discharging of the all-solid secondary battery 1, the filler may release the adsorbed moisture and effectively prevent or reduce the all-solid secondary battery 1 from catching fire. For example, the filler may be a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, TI(OH)₃, Zr(OH)₄, Al(OH)₃, or a combination thereof. The content (e.g., amount) of the filler included in the flame-retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of a flame-retardant inactive member.

The flame-retardant inactive member may include a binder, for example. The binder may include, for example, a curable polymer or a non-curable polymer. The curable polymer may be a polymer that cures by heat and/or pressure. For example, the curable polymer may be solid at room temperature. The flame-retardant inactive member 60, 60a, 60b may include, for example, a thermal-press curable film and/or a cured product thereof. The thermal-press curable film may be TSA-66 by Toray, for example.

In addition to the substrate, the reinforcing material, the filler, and the binder described above, the flame-retardant inactive member may further include other materials. For example, the flame-retardant inactive member may further include at least one of (e.g., at least one selected from among) paper, an insulating polymer, an ionically conductive polymer, an insulating inorganic material, an oxide-based solid electrolyte, and/or a sulfide-based solid electrolyte. The insulating polymer may be an olefin-based polymer such as polypropylene (PP), polyethylene (PE), and/or the like.

The substrate or the reinforcing material included in the flame-retardant inactive member may have a density of, for example, about 10% to about 300%, about 10% to about 150%, about 10% to about 140%, about 10% to about 130%, or about 10% to about 120%, relative to the density of the cathode active material included in a cathode active material layer 12, 12a, 12b.

The inactive member 60, 60a, 60b may be a member not containing any material with electrochemical activity, *i.e*., not including an electrode active material. The electrode active material may be a material that absorbs/desorbs lithium. The inactive member 60, 60a, 60b may be a member composed of a (*e.g*., any) suitable material available in the art that is not an electrode active material.

### Cathode Layer: Cathode Active Material

Referring to FIGs. 1 and 4, the cathode active material layer 12, 12a, 12b may include, for example, a cathode active material.

The cathode active material included in the cathode active material layer 12 may be a cathode active material capable of reversible absorption and desorption of lithium ions. The cathode active material may include, for example, an oxide-based cathode active material, a sulfide-based cathode active material, or a combination thereof.

The oxide-based cathode active material may include, for example, a lithium transition metal oxide, a metal oxide, or a combination thereof. Examples of the lithium transition metal oxide may include a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof. The lithium oxide may include, for example, an iron oxide, a vanadium oxide, or a combination thereof.

The sulfide-based cathode active material may include, for example, a nickel sulfide, copper sulfide, Li₂S, a Li₂S-containing composite, or a combination thereof.

The cathode active material may include, for example, a lithium salt of a transition metal oxide that has a layered rock-salt type or kind structure among the examples of the lithium transition metal oxide described above. For example, the "layered rock-salt type or kind structure" refers to a structure in which an oxygen atom layer and a metal atom layer are alternately and regularly arranged in a <111 > direction in a cubic rock-salt type or kind structure, where each of the atom layers forms a two-dimensional flat plane. The "cubic rock-salt type or kind structure" refers to a sodium chloride (NaCl) type or kind structure, which is one of the crystalline structures, for example, a structure in which face-centered cubic (fcc) lattices respectively formed of anions and cations are shifted by only a half of the ridge of each unit lattice. Examples of the lithium transition metal oxide having the layered rock-salt type or kind structure may include a ternary lithium transition metal oxide, such as LiNiₓCo_{y}Al_{z}O₂ (NCA) and LiNiₓCo_{y}Mn_{z}O₂ (NCM) (wherein in each of NCA and NCM, x, y, and z are independently 0 < x < 1, 0 < y < 1, 0 < z < 1, and x + y + z = 1). If (e.g., when) the cathode active material contains a ternary lithium transition metal oxide having the layered rock-salt type or kind structure, an energy density and thermal stability of an all-solid secondary battery 1 may further improve.

The cathode active material may include, for example, a lithium transition metal oxide represented by at least one of Formulas 1 to 7:

Formula 1 LiₐNiₓCo_{y}M_{z}O_{2-b}A_{b}

In Formula 1, 1.0≤a≤1.2, 0≤b≤0.2, 0.8≤x<1, 0≤y≤0.3, and 0<z≤0.3, wherein x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof.

Formula 2 LiNiₓCo_{y}Mn_{z}O₂

Formula 3 LiNiₓCo_{y}Al_{z}O₂

In Formulas 2 and 3, 0.8≤x≤0.95, 0≤y≤0.2, 0<z≤0.2, and x+y+z=1.

Formula 4 LiNiₓCo_{y}Mn_{z}Al_{w}O₂

In Formula 4, 0.8≤x≤0.95, 0≤y≤0.2, 0<z≤0.2, 0<w≤0.2, and x+y+z+w=1.

Formula 5 LiₐNiₓMn_{y}M'_{z}O_{2-b}A_{b}

In Formula 5, 1.0≤a≤1.2, 0≤b≤0.2, 0.8≤x<1, 0<y≤0.2, 0≤z≤0.2, and x+y+z=1, M' may be niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, A may be F, S, Cl, Br, or a combination thereof,

Formula 6 LiₐM1ₓM2_{y}PO_{4-b}X_{b},

wherein, in Formula 6, 0.90≤a≤1.1, 0≤x≤0.9, 0≤y≤0.5, 0.9<x+y<1.1, 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof, and

   Formula 7 LiₐM3_{z}PO₄,
wherein, in Formula 7, 0.90≤a≤1.1, 0.9≤z≤1.1, and
M3 is chromium (Cr), manganese (Mn), iron (Fe), cobalt (Co), nickel (Ni), copper (Cu), zirconium (Zr), or a combination thereof.

The cathode active material may be covered by a coating layer. The coating layer may be any suitable material that may be utilized as a coating layer of a cathode active material of an all-solid secondary battery. The coating layer may be, for example, Li₂O-ZrO₂ (LZO).

The cathode active material may include, for example, a Li₂S-containing composite. Examples of the Li₂S-containing composite may include a Li₂S-carbon composite, a Li₂S-carbon-solid electrolyte composite, a Li₂S-solid electrolyte composite, a Li₂S-metal carbide composite, a Li₂S-carbon-metal carbide composite, a Li₂S-metal nitride composite, a Li₂S-carbon-metal nitride composite, or a combination thereof.

The Li₂S-carbon composite may include a carbon. The carbon may be, for example, any suitable carbon-containing material available as a conductive material in the art. The carbon may be, for example, crystalline carbon, amorphous carbon, or a combination thereof. The carbon may be, for example, a fired product of a carbon precursor. The carbon may be, for example, a carbon nanostructure. Examples of the carbon nanostructure may include a one-dimensional carbon nanostructure, a two-dimensional carbon nanostructure, a three-dimensional carbon nanostructure, or a combination thereof. Examples of the carbon nanostructure may include carbon nanotubes, carbon nanofibers, carbon nanotubes, carbon nanorods, graphene, or a combination thereof. The carbon may be, for example, porous carbon or non-porous carbon. The porous carbon may contain, for example, a periodic and regular two-dimensional or three-dimensional pores. Examples of the porous carbon may include carbon black, such as Ketjen black, acetylene black, Denka black, thermal black, and/or channel black, and/or graphite, activated carbon, or a combination thereof. The form of the carbon may be a particulate form, a sheet form, a flake shape, and/or the like, but the present disclosure is not limited thereto, and may utilize any suitable material available as carbon in the art. The Li₂S-carbon composite may be prepared by methods including, but not limited to, a dry method, a wet method, or a combination thereof. Further, methods available in the art for preparing Li₂S-carbon composites include milling, heat treatment, deposition, and/or the like, but the present disclosure is not limited to the aforementioned methods, and any suitable method available in the art may be utilized.

The Li₂S-carbon-solid electrolyte composite may include a carbon and a solid electrolyte. For details of the carbon, refer to the Li₂S-carbon composite above. The solid electrolyte may be, for example, any suitable material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may contain, for example, Li, S, and P, and may optionally further contain a halogen element. The sulfide-based solid electrolyte may be (e.g., may be selected from) sulfide-based solid electrolytes that are utilized in a solid electrolyte layer. The sulfide-based solid electrolyte may have an ionic conductivity of 1×10⁻⁵ S/cm or more at room temperature, for example. The oxide-based solid electrolyte may contain, for example, Li, O, and a transition metal element, and may optionally further contain other elements. For example, the oxide-based solid electrolyte may be a solid electrolyte having an ionic conductivity of 1×10⁻⁵ S/cm or more at room temperature. The oxide-based solid electrolyte may be (*e.g*., may be selected from) oxide-based solid electrolytes that are utilized in a solid electrolyte layer.

The Li₂S-solid electrolyte composite may include a solid electrolyte. For details of the solid electrolyte, refer to the Li₂S-carbon-solid electrolyte composite above.

The Li₂S-metal carbide composite may include a metal carbide. The metal carbide may be, for example, a two-dimensional metal carbide. The two-dimensional metal carbide may be represented by, for example, Mₙ₊₁CₙTₓ (M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. The surface of the two-dimensional metal carbide may be terminated by O, OH, and/or F.

The Li₂S-carbon-metal carbide composite may include a carbon and a metal carbide. For details of the carbon, refer to the Li₂S-carbon composite above. For details of the metal carbide, refer to the Li₂S-metal carbide composite above.

The Li₂S-metal nitride composite may include a metal nitride. The metal nitride may be, for example, a two-dimensional metal nitride. The two-dimensional metal nitride may be represented by, for example, Mₙ₊₁NₙTₓ(M is a transition metal, T is a terminal group, T is O, OH and/or F, n = 1, 2, or 3, and x is the number of terminal groups). The surface of the two-dimensional metal nitride may be terminated by O, OH, and/or F.

The Li₂S-carbon-metal nitride composite may include a carbon and a metal nitride. For details of the carbon, refer to the Li₂S-carbon composite described above. For details of the metal carbide, refer to the Li₂S-metal nitride composite described above.

The content (e.g., amount) of the sulfide-based cathode active material included in a cathode active material layer 12, 12a, 12b may be, for example, about 10 wt% to about 90 wt%, about 10 wt% to about 80 wt%, about 10 wt% to about 70 wt%, about 10 wt% to about 60 wt%, or about 10 wt% to about 50 wt%, with respect to the total weight of the cathode active material layer 12, 12a, 12b.

The cathode active material layer 12, 12a, 12b may further include, for example, a sulfide-based compound distinguished from Li₂S. The sulfide-based compound may be, for example, a compound including sulfur and a metal element other than Li. The sulfide-based compound may be, for example, a compound including sulfur and a metal element with an atomic weight of 10 or more, that belongs to Groups 1 to 14 in the Periodic Table of Elements. The sulfide-based compound may be, for example, FeS₂, VS₂, NaS, MnS, FeS, NiS, CuS, or a combination thereof. As the cathode active material layer further includes a sulfide-based compound, cycling performance of an all-solid secondary battery may further improve. The content (e.g., amount) of the sulfide-based compound distinguished from Li₂S, included in the cathode active material layer 12, 12a, 12b may be 10 wt% or less, 5 wt% or less, 3 wt% or less, or 1 wt% or less, with respect to the total weight of the cathode active material layer 12, 12a, 12b.

The cathode active material may have a particulate form, such as a perfect sphere, an oval sphere, and/or the like. The particle diameter of the cathode active material is not particularly limited and may be within a range applicable to a cathode active material of an all-solid secondary battery of the related art. The content (e.g., amount) of the cathode active material in the cathode layer 10 is not particularly limited and may be within a range applicable to a cathode layer of an all-solid secondary battery in the related art.

### Cathode Layer: Solid Electrolyte

The cathode active material layer 12, 12a, 12b may further include, for example, a solid electrolyte. The cathode active material layer 12, 12a, 12b may include an oxide-based solid electrolyte or a sulfide-based solid electrolyte.

The solid electrolyte included in the cathode active material layer 12, 12a, 12b may be a sulfide-based solid electrolyte. For details of the sulfide-based solid electrolyte, refer to the solid electrolyte layer 30, 30a, 30b.

The solid electrolyte included in the cathode active material layer 12, 12a, 12b may be an oxide-based solid electrolyte. The oxide-based solid electrolyte may be, for example, at least one of (e.g., at least one selected from among) Li_{1+x+y}AlₓTi₂₋ₓSi_{y}P_{3-y}O₁₂ (0<x<2 and 0≤y<3), BaTiO₃, Pb(Zr,Ti)O₃(PZT), Pb₁₋ₓLaₓZr_{1-y} Ti_{y}O₃(PLZT) (0≤x<1 and 0≤y<1), Pb(Mg₃Nb₂ or ₃)O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, and/or Li₃₊ₓLa₃M₂O₁₂ (M = Te, Nb, or Zr, and x is an integer of 1 to 10). The solid electrolyte may be prepared by a sintering method and/or the like. For example, the oxide-based solid electrolyte may be a garnet-type or kind solid electrolyte including (*e.g*., selected from) Li₇La₃Zr₂O₁₂ (LLZO) and/or Li₃₊ₓLa₃Zr₂₋ₐMₐO₁₂ (M-doped LLZO wherein M=Ga, W, Nb, Ta, or Al, and x is an integer of 1 to 10).

The solid electrolyte included in the cathode active material layer 12, 12a, 12b may have a smaller particle diameter than that of a solid electrolyte included in the solid electrolyte layer 30, 30a, 30b. For example, the particle diameter of the solid electrolyte included in the cathode active material layer 12, 12a, 12b may be 90% or less, 80% or less, 70% or less, 60% or less, 50% or less, 40% or less, 30% or less, or 20% or less, relative to the particle diameter of the solid electrolyte included in the solid electrolyte layer 30, 30a, 30b. The particle diameter of the solid electrolyte may be, for example, median particle diameter (D50). The median particle diameter (D50) refers to a particle size corresponding to a cumulative volume of 50 vol% as counted from the smallest particle size in a particle size distribution measured by a laser diffraction method.

### Cathode Layer: Binder

The cathode active material layer 12, 12a, 12b may include a binder. The binder may be, for example, styrene butadiene rubber (SBR), polytetrafluoroethylene, polyvinylidene fluoride, polyethylene, and/or the like, but the present disclosure is not limited to the aforementioned examples, and may utilize any suitable material utilized as a binder in the art.

### Cathode Layer: Conductive Material

The cathode active material layer 12, 12a, 12b may include a conductive material. The conductive material may be, for example, graphite, carbon black, acetylene black, Ketjen black, carbon fibers, metal powder, and/or the like, but the present disclosure is not limited thereto, and may utilize any suitable material available as a conductive material in the art.

### Cathode Layer: Other Additives

The cathode active material layer 12, 12a, 12b may further include, for example, an additive such as a filler, a coating agent, a dispersing agent, and/or an ionically conductive aid, in addition to the cathode active material, the solid electrolyte, the binder, and the conductive material described above.

For the filler, coating agent, dispersing agent, and ion-conducting agent that may be included in the cathode active material layer 12, any suitable material generally utilized in an electrode of an all-solid secondary battery may be utilized.

### Cathode Layer: Cathode Current Collector

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. The cathode current collector 11 may have a thickness of, for example, about 1 µm to about 100 µm, about 1 µm to about 50 µm, about 5 µm to about 25 µm, or about 10 µm to about 20 µm.

For example, the cathode current collector 11 may include a base film, and a metal layer disposed on one surface or both (e.g., opposite) surfaces of the base film. The base film may include, for example, a polymer. For example, the polymer may include polyethylene terephthalate (PET), polyethylene (PE), polypropylene (PP), polybutylene terephthalate (PBT), polyimide (PI), or a combination thereof. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector decrease, and therefore, stability of the lithium battery may be improved in the event of a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, a metal foil and a metal mesh. The metal chip may be, for example, an aluminum foil, a copper foil, an SUS foil, and/or the like. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. A metal chip and/or a lead tab may further be added to the metal layer. The base film may have a thickness of, for example, about 1 µm to about 50 µm, about 1.5 µm to about 50 µm, about 1.5 µm to about 40 µm, or about 1 µm to about 30 µm. With the thickness of the base film within the above-described ranges, the weight of the electrode assembly may be more effectively reduced. A melting point of the base film may be, for example, from about 100 °C to about 300 °C, from about 100 °C to about 250 °C, or from about 100 °C to about 200 °C. Because the base film has a melting point within the above-described ranges, the base film melts during a process of welding the lead tab and may be easily bound to the lead tab. To improve adhesion between the base film and the metal layer, surface treatment such as corona treatment may be performed on the base film. The thickness of the metal layer may be, for example, from about 0.01 µm to about 3 µm, from about 0.1 µm to about 3 µm, from about 0.1 µm to about 2 µm, or from about 0.1 µm to about 1 µm. With the thickness of the metal layer within the above-described ranges, stability of the electrode assembly may be ensured while maintaining conductivity thereof. The thickness of the metal chip may be, for example, from about 2 µm to about 10 µm, from about 2 µm to about 7 µm, or from about 4 µm to about 6 µm. With the thickness of the metal chip within the above-described ranges, the metal layer may be more easily connected to the lead tab. As the cathode current collector 11 has such a structure, the weight of the electrode may be reduced and as a result, energy density of the all-solid secondary battery may improve.

### Electrode Assembly Stack

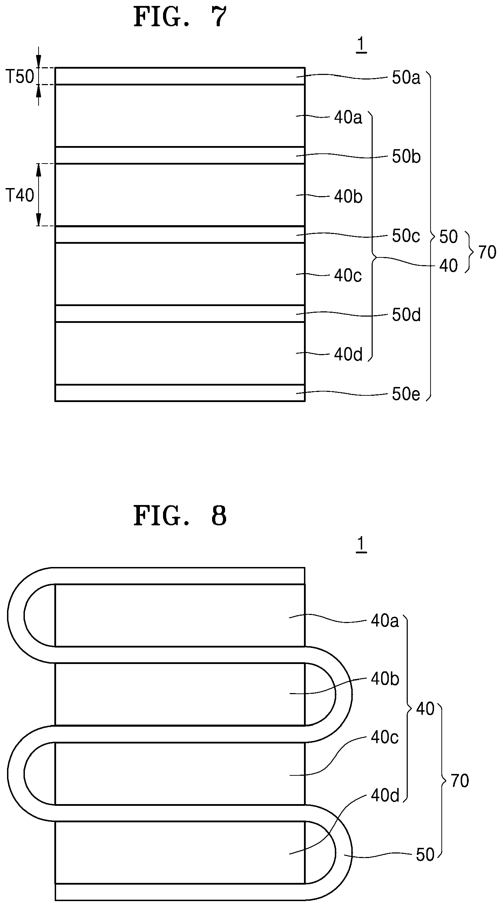

As shown in FIGs. 7 to 8, an all-solid secondary battery 1 may include an electrode assembly stack 70. In the electrode assembly stack 70, a plurality of electrode assemblies 40, 40a, 40b, 40c, 40d may be arranged along one direction while spaced and/or apart from (e.g., separated from) each other, and a second protecting layer 50, 50a, 50b, 50c, 50d, 50e may be positioned between the plurality of electrode assemblies 40, 40a, 40b, 40c, 40d. The second protecting layer 50, 50a, 50b may include a porous multilayer member 51. Having the second protecting layer 50, 50a, 50b, 50c, 50d, 50e disposed between the plurality of electrode assemblies 70 may effectively accommodate volume changes of the electrode assembly stack 70 during charge and discharge and improve structural stability of the all-solid secondary battery 1. As a result, lifetime characteristics of the all-solid secondary battery 1 may improve.

A thickness T50 of a second protecting layer 50, 50a, 50b, 50c, 50d, 50e may be smaller than a thickness T40 of an electrode assembly 40, 40a, 40b, 40c, 40d. If (e.g., when) the thickness T50 of the second protecting layer 50, 50a, 50b, 50c, 50d, 50e is larger than the thickness T40 of the electrode assembly 40, 40a, 40b, 40c, 40d, the energy density of the all-solid secondary battery 1 may deteriorate excessively. The thickness T50 of the second protecting layer 50, 50a, 50b, 50c, 50d, 50e may be 90 % or less, 80 % or less, 70% % or less, 50 % or less, 30 % or less, 20 % or less, or 10 % or less, with respect to the thickness T40 of the electrode assembly 40, 40a, 40b, 40c, 40d.

Referring to FIG. 7, in the electrode assembly stack 70, a plurality of second protecting layers 50b, 50c, 50d may be positioned between a plurality of electrode assemblies 40a, 40b, 40c, 40d that are spaced and/or apart from (e.g., separated from) each other, and second protecting layers 50a, 50e may be additionally positioned on an outermost layer of the electrode assembly stack 70. The electrode assembly stack 70 may be prepared, for example, as a magazine type or kind in which a plurality of second protecting layers 50b, 50c, 50d are arranged in a discontinuous manner between a plurality of electrode assemblies 40a, 40b, 40c, 40d.

Referring to FIG. 8, in the electrode assembly stack 70, one second protecting layer 50 may be arranged by bending multiple times between a plurality of electrode assemblies 40a, 40b, 40c, 40d that are spaced and/or apart from (e.g., separated from) each other, and the second protecting layer 50 may be extended onto an outermost layer of the electrode assembly stack 70. The electrode assembly stack 70 may be prepared, for example, as a reel type or kind in which one second protecting layer 50 is continuously disposed between a plurality of electrode assemblies 40a, 40b, 40c, 40d.

In one or more embodiments, the all-solid secondary battery 1 may further have a press plate provided on both sides of the electrode assembly 40 or on both sides of the electrode assembly stack 70. Due to the additionally provided press plate, a certain pressure may be applied to the electrode assembly 40.

### Preparation of All-solid Secondary Battery

### Preparation of Anode Layer

The cathode current collector may be prepared by introducing a first protecting layer 23, 23a, 23b on a metal substrate. The first protecting layer 23, 23a, 23b may be prepared by a wet method or a dry method, as described above.

The anode layer 20, 20a, 20b may be prepared by a wet method, following an anode layer preparation method of the related art. For example, an anode slurry may be prepared by combining an anode active material, a conductive material, a binder, and a solvent. An anode layer 20, 20a, 20b may be prepared by coating and drying the anode slurry on an anode current collector 21, 21a, 21b provided with the first protecting layer 23, 23a, 23b. The solvent utilized for the preparation of the anode slurry is not particularly limited and may be any suitable solvent in the art that is utilized for an anode slurry. The solvent utilized for the anode slurry may be, for example, NMP. For the types (kinds) and contents of the anode current collector, the anode active material, the conductive material, and the binder, reference may be made to the description of the anode layer above.

### Preparation of Second protecting Layer

A porous multilayer member 51 may be prepared by placing a porous film on one surface or both (e.g., opposite) surfaces of a porous sheet. The porous sheet may correspond to a porous cushioning layer 52, and the porous film may correspond to a porous covering layer 53, 53a, 53b. The porous multilayer member 51 corresponds to a second protecting layer 50, 50a, 50b.

The porous sheet may be, for example, a porous foam sheet or a porous sponge sheet. Due to adhesive properties of the porous sheet, the porous film may be easily attached to one surface or both (e.g., opposite) surfaces of the porous sheet directly. In one or more embodiments, a binder may be further disposed to improve adhesion between the porous sheet and the porous film. The binder may be the same binder utilized in the cathode layer, the anode layer, and/or the solid electrolyte layer.

The porous sheet may have a thickness of about 10 µm to about 200 µm, and an air permeability of 1,000 sec/100 cc or more. For details of the porous sheet, refer to the porous cushioning layer 52 described in more detail above.

The porous film may have a thickness of about 1 µm to about 50 µm, an air permeability of 1,000 sec/100 cc or less, a porosity of about 5 % to about 95%, and a pore size of about 0.01 µm to about 20 µm. For details of the porous film, refer to the porous covering layer 53, 53a, 53b described in more detail above.

The porosity and/or average pore size of the porous sheet and porous film may be determined, for example, from scanning electron microscopic (SEM) images, by utilizing a mercury porosimeter or capillary flow porosimeter, or through the BET6-point method based on nitrogen gas adsorption flow utilizing a porosimetry analyzer (e.g., Belsorp-II mini, Bell Japan Inc.).

### Preparation of Solid Electrolyte Layer

The solid electrolyte layer 30, 30a, 30b may be prepared by a dry method or a wet method.

The dry method of preparing a solid electrolyte layer may include: preparing a dry mixture by dry-mixing a sulfide-based solid electrolyte and a binder; preparing a solid electrolyte layer by forming the dry mixture; and disposing the solid electrolyte layer between a cathode layer and an anode layer, wherein the inorganic particles may have an average particle diameter of about 50 nm to about 5 µm or less.

First, a dry mixture may be prepared by mixing a sulfide-based solid electrolyte and a binder. The term "dry-mixing" may refer to a process of mixing in the absence of a process solvent. The dry mixture may refer to a mixture not containing any process solvent that is deliberately added. The process solvent may be, for example, a solvent utilized in the preparation of an electrode slurry. The binder may be, for example, a dry binder. The dry binder may refer to a binder not containing any process solvent. For example, the process solvent may be water, NMP, and/or the like, but the present disclosure is not limited thereto and the process solvent may be any suitable process solvent available for use in the preparation of an electrode slurry. The dry-mixing may be carried out utilizing an agitator, at a temperature of, for example, about 25 °C to about 85 °C, or 65 °C to about 85 °C. The dry-mixing may be carried out utilizing an agitator, at a rotation rate of, for example, about 10 rpm to about 10,000 rpm, or about 100 rpm to about 10,000 rpm. The dry-mixing may be carried out utilizing an agitator, for a duration of, for example, about 1 minute to about 200 minutes. The dry-mixing may be carried out, for example, once or more. Through the dry-mixing, a dry mixture containing a fibrillated dry binder may be obtained. The agitator may be, for example, a mixer or a kneader. The agitator may include, for example, a chamber; at least one rotary shaft disposed inside the chamber and rotating; and a blade rotatably coupled to the rotary shaft and arranged in a longitudinal direction of the rotary shaft. The blade may be, for example, at least one of (e.g., at least one selected from) a ribbon blade, a sigma blade, a Z blade, a dispersing blade, and/or a screw blade. By including the blade, a dough-like mixture may be prepared, even without solvent, by effectively mixing an electrode active material, a dry conductive material, and a dry binder.

Next, a solid electrolyte layer maybe prepared by forming the dry mixture. The prepared dry mixture may be, for example, introduced into an extrusion device and extruded into a sheet form. The pressure during extrusion may be, for example, about 4 MPa to about 100 MPa, or about 10 MPa to about 90 MPa. The mixture thus obtained may be in a sheet form. For example, the obtained sheet-like mixture may be a solid electrolyte layer. The extrusion device may be, for example, a roller or an extruder. For the types (kinds) and contents of the sulfide-based solid electrolyte and the binder, reference may be made to the solid electrolyte layer 30, 30a, 30b described in more detail above. The binder may not be provided. For example, because sulfide-based solid electrolyte particles are partially sintered by pressing, the binder may not be provided.

The wet method of preparing a solid electrolyte layer may include: preparing a slurry by mixing a sulfide-based solid electrolyte, a binder, and a solvent; preparing a solid electrolyte layer by forming and drying the slurry; and arranging the solid electrolyte layer between a cathode layer and an anode layer.

First, a slurry may be prepared by mixing a sulfide-based solid electrolyte, a binder, and a solvent. For details of the sulfide-based solid electrolyte and the binder, refer to the solid electrolyte layer 30, 30a, 30b described in more detail above. The binder may be the same binder or a different binder from the one utilized in the dry method. The binder utilized in the solid electrolyte layer may be, for example, styrene butadiene rubber (SBR), polytetrafluoroethylene, polyvinylidene fluoride, polyethylene, and/or the like, but the present disclosure is not limited to the aforementioned examples, and the binder may be any suitable material utilized as a binder in the art. The solvent is not particularly limited and may be any suitable material that can dissolve a binder without reacting with a sulfide-based solid electrolyte. The solvent may be, for example, octyl acetate.

Next, a solid electrolyte layer may be prepared by forming and drying the slurry. For example, the slurry may be applied and dried on a substrate, and then separated from the substrate to produce a solid electrolyte layer. The method of application and the drying conditions may be consistent with a method and/or a range of conditions generally utilized in the art.

Next, the solid electrolyte layer may be placed between the cathode layer and the anode layer. As described above, the solid electrolyte layer may be prepared separately and then placed between the cathode layer and/or the anode layer, or may be disposed by applying and drying the slurry on the cathode layer and/or the anode layer.

### Preparation of Cathode Layer

The cathode layer 10 may be prepared by a dry method or a wet method.

The cathode layer may be prepared by a wet method, for example. A cathode slurry may be prepared by mixing a cathode active material, a sulfide-based solid electrolyte, a conductive material, a binder, and a solvent. A cathode layer may be prepared by coating and drying the cathode slurry onto a cathode current collector. The solvent utilized for the preparation of the cathode slurry is not particularly limited, and may be any suitable solvent in the art that is utilized for a cathode slurry. The solvent utilized for the cathode slurry may be, for example, para-xylene. For the types (kinds) and contents of the cathode current collector, the cathode active material, the conductive material, and the binder, reference may be made to the cathode layer 10 described in more detail above.

The cathode layer may be prepared by a dry method, for example. First, a dry mixture may be prepared by mixing a cathode active material, a sulfide-based solid electrolyte, a conductive material, and a binder. Next, a cathode active material layer maybe prepared by molding the dry mixture. Next, the prepared cathode active material layer may be placed on one surface or both (e.g., opposite) surfaces of the cathode current collector and pressed to prepare a cathode layer. The binder may be, for example, a dry binder. Specific conditions and methods employed during the process of preparing a dry mixture and the process of molding the dry mixture may be substantially the same as in the method of preparing a solid electrolyte layer described above. For the types (kinds) and contents of the cathode current collector, the cathode active material, the conductive material, and the binder, reference may be made to the cathode layer 10 described in more detail above.

### Preparation of All-Solid Secondary Battery

An all-solid secondary battery 1 may be prepared as follows, for example.

First, an electrode assembly provided with a cathode layer; an anode layer; and a solid electrolyte layer disposed between the cathode layer and the anode layer may be provided.

By disposing the solid electrolyte layer on the anode layer such that an anode active material layer and the solid electrolyte layer are in contact with each other, an anode layer/solid electrolyte layer stack may be prepared. Subsequently, by placing the solid electrolyte layer on one surface or both (e.g., opposite) surfaces of the cathode layer, such that the solid electrolyte layer faces a cathode active material layer, an anode layer/solid electrolyte layer/cathode layer stack may be prepared. The prepared anode layer/solid electrolyte layer/cathode layer stack may be plate-pressed at about 50 °C to about 100 °C, by a pressure of about 300 MPa to about 600 MPa, for about 10 minutes to about 60 minutes. As the solid electrolyte layer may be partially sintered by such a press treatment, the battery performance may improve. The pressed stack may be provided as an electrode assembly.

Next, a porous multilayer member may be provided on one surface or both (e.g., opposite) surfaces of the electrode assembly. The porous multilayer member may include a porous cushioning layer; and a porous covering layer disposed on one surface or both (e.g., opposite) surfaces of the porous cushioning layer.

By sealing the electrode assembly with a sealing material, and placing the porous multilayer member on one surface or both (e.g., opposite) surfaces of the sealed electrode assembly, the preparation of an all-solid secondary battery may be complete. In one or more embodiments, the preparation of an all-solid secondary battery may be complete by placing the porous multilayer member on one surface or both (e.g., opposite) surfaces of the electrode assembly, and then sealing the electrode assembly with the porous multilayer member disposed thereon with an enclosure material. In one or more embodiments, an electrode assembly stack may be prepared by preparing a plurality of electrode assemblies spaced and/or apart (*e.g*., separated) along a thickness direction, and arranging a plurality of porous multilayer members between the plurality of spaced and/or apart (*e.g*., separated) electrode assemblies. The electrode assembly stack may be sealed with an enclosure material to complete the preparation of an all-solid secondary battery. In one or more embodiments, an electrode assembly stack may be prepared by preparing a plurality of electrode assemblies spaced and/or apart (*e.g*., separated) along a thickness direction, and arranging a single porous multilayer member by bending multiple times between the plurality of spaced and/or apart (*e.g*., separated) electrode assemblies. The electrode assembly stack may be sealed with an enclosure material to complete the preparation of an all-solid secondary battery.

The present disclosure will be described in greater detail through the following examples and comparative examples. However, it will be understood that the examples are provided only to illustrate the present disclosure and are not to be construed as limiting the scope of the present disclosure.

### Example 1: Wet-coated Graphene (First Protecting Layer) + PE (10 µm)/Polyacryl foam (80 µm)/PE (10 µm) (Second Protecting Layer), Mono-Cell All-Solid

### Secondary Battery

### Preparation of Porous Multilayer Member

A porous polyacryl foam sheet (YT-3720BHF, Youngwoo Co. Ltd., Korea) was prepared/supplied. A porous polyethylene film (Cangzhou Mingzhou Plastic Co, Ltd., China) was prepared/supplied. The porous polyacryl foam sheet is an adhesive sheet. The porous polyethylene film is a non-adhesive film. A porous multilayer member was prepared by placing and then pressing a porous film on each side of the porous polyacrylic foam sheet. Because the porous polyethylene film does not have adhesive properties, the surface of the porous multilayer member did not have adhesive properties. The thickness of the porous polyacryl foam sheet was 80 µm. The thickness of the porous polyethylene film was 10 µm. The porous polyethylene film had an air permeability of 178 sec/100 cc and a porosity of 38 %.

### Preparation of Solid Electrolyte Layer, Dry Method

Using 98 parts by weight of an argyrodite-type or kind crystal LiePSsC! sulfide-based solid electrolyte (D₅₀ = 10 mm, crystalline), 1 part by weight of a first binder polytetrafluoroethylene (PTFE), and 1 part by weight of a second binder poly(vinylidene fluoride) (PVDF), a mixture was prepared by mixing in a grind mixer. The prepared mixture was placed and mixed in a mortar and pestle heated to 80 °C to prepare a dough. The prepared dough was formed into a sheet by passing through a roller, to prepare a solid electrolyte film having a thickness. Through the above process, a solid electrolyte layer was prepared. Two such solid electrolyte layers were prepared. The elastic modulus of the sulfide-based solid electrolyte was about 15 GPa to 30 GPa.

### Preparation of Anode Layer

An anode current collector with a carbon layer wet-coated on one side of a 20 µm-thick Cu foil was prepared. The carbon layer was prepared by coating and drying a graphene dispersion on the Cu foil. The graphene dispersion was prepared by dispersing graphene oxide and a polyvinylidene fluoride (PVDF) binder in N-methyl pyrrolidone.

Further, as an anode active material, carbon black (CB) having a primary particle diameter of about 30 nm and silver (Ag) particles having an average particle diameter (D50) of about 60 nm were prepared.

In a vessel containing 4 grams of mixed powder containing carbon black (CB) and Ag particles in a weight ratio of 3:1, 4 grams of an NMP solution containing 7 wt% of a PVDF binder (#9300, KUREHA) were added to prepare a mixed solution. The mixed solution was stirred while slowly adding NMP to this mixed solution, to produce a slurry. The produced slurry was applied to the carbon layer of the prepared anode current collector by a bar coater, and then dried in open air at 80 °C for 10 minutes. The laminate thus obtained was vacuum-dried at 40 °C for 10 hours. By cold roll-pressing the dried laminate, the surface of the first anode active material layer of the laminate was flattened. Through the above process, an anode layer was prepared. The thickness of the first anode active material layer included in the anode layer was about 7 µm. The thickness of the carbon layer, which is the first protecting layer, was about 2 µm.

### Preparation of Cathode Layer

LiNi_{0.8}Co_{0.15}Mn_{0.05}O₂ (NCM) coated with Li₂O-ZrO₂ (LZO) was prepared as a cathode active material. The LZO-coated cathode active material was prepared following the process disclosed in KR 10-2016-0064942, the entire content of which is hereby incorporated by reference. As a solid electrolyte, argyrodite-type or kind crystal Li₆PS₅Cl (D50=0.5 µm, crystalline) was prepared. As a binder, a polytetrafluoroethylene (PTFE) binder was prepared. As a conductive material, carbon nanofibers (CNF) were prepared. These materials were mixed at a weight ratio of cathode active material: solid electrolyte : binder : conducting agent = 84 : 11.5 : 3 : 1.5 with xylene as solvent, and the resulting slurry was molded into a sheet, and the sheet was vacuum-dried at 40 °C for 8 hours to prepare a cathode sheet. Using a cathode current collector formed of an aluminum foil coated with a carbon layer, the prepared cathode sheet was placed on the carbon layer and subjected to a heated roll-press at 85 °C to produce a cathode layer. The total thickness of the cathode layer was about 120 µm. The thickness of each cathode active material layer was about 95 µm, and the thickness of the carbon-coated aluminum foil was about 25 µm.

### Inactive Member

A slurry obtained by mixing cellulose fibers, glass fibers, aluminum hydroxide (Al(OH)₃), an acryl-based binder, and a solvent was molded in the form of a gasket, and then the solvent was removed therefrom to produce a flame-retardant inactive member.

The weight ratio of cellulose fibers : glass fibers : aluminum hydroxide (Al(OH)₃): acryl-based binder was 20:8:70:2. The thickness of the inactive member was about 120 µm. The prepared flame-retardant inactive member was allowed to rest at room temperature for 1 week before use.

Before the inactive member was applied to an all-solid secondary battery, a vacuum heat treatment was carried out at 80 °C for 5 hours to remove moisture and/or the like from the inactive member.

### Preparation of All-Solid Secondary Battery

Referring to FIG. 3, the solid electrolyte layer was disposed on the anode layer, such that the first anode active material layer is contiguous with the solid electrolyte layer. A flame-retardant inactive member was thermally pressed on the solid electrolyte layer to prepare an anode layer/solid electrolyte layer/inactive member laminate.

The inactive member was placed on one side of the cathode layer, such that the inactive member was facing the cathode active material layer, to prepare an anode layer/solid electrolyte layer/cathode layer electrode assembly. The inactive member was disposed around the cathode layer, around (*e.g*., surrounding) a side surface of the cathode layer while in contact with the solid electrolyte layer. The inactive member was utilized as a gasket. The cathode layer was disposed in the center portion of the solid electrolyte layer, and the gasket was placed extending to a terminal portion (*e.g*., an end) of the solid electrolyte layer, while around (*e.g*., surrounding) the cathode layer. The surface area of the cathode layer was about 90% of the surface area of the solid electrolyte layer, and the gasket was positioned in all of the remaining 10% of the surface area of the solid electrolyte layer that did not have the cathode layer disposed therein.

The prepared anode layer/solid electrolyte layer/cathode layer electrode assembly was plate-pressed at 85 °C with a pressure of 500 MPa for 30 minutes. Such a press treatment may sinter the solid electrolyte layer and improve battery performance. The thickness of the sintered solid electrolyte layer was about 45 µm. The sintered electrode assembly was placed in a pouch and sealed to prepare a sealed electrode assembly. A part of each of the cathode current collector and the anode current collector was extended out of the sealed electrode assembly and utilized as a cathode layer terminal and an anode layer terminal, respectively.

The porous multilayer member was placed on both sides of the sealed electrode assembly. The porous multilayer member was placed on each of the cathode current collector and the anode current collector of the electrode assembly.

The electrode assembly with the porous multilayer members disposed thereon was placed between two press plates, and by coupling the two press plates with screws and applying a pressure to both sides of the electrode assembly, an all-solid secondary battery was prepared.

### Example 2: N-doped Wet-Coated Graphene (First Protecting Layer) + PE (10 µm) / Polyacryl foam (80 µm) / PE (10 µm) (Second Protecting Layer)

An anode and an all-solid secondary battery were prepared following substantiall the same process as Example 1, except that nitrogen-doped graphene was utilized as graphene. The nitrogen-doped graphene was prepared according to a method disclosed in KR. 2014-0054784, the entire content of which is hereby incorporated by reference.

### Example 3: Directly-grown multilayer horizontally-arranged graphene (First Protecting Layer) + PE (10 µm) / Polyacryl foam (80 µm) / PE (10 µm) (Second Protecting Layer)

An anode and an all-solid secondary battery were prepared following substantially the same process as Example 1, except that a 20 µm-thick Cu foil having a carbon layer coated on one side thereof by deposition was utilized as an anode current collector.

By the deposition, graphene horizontally arranged with respect to the surface of the Cu foil was directly grown in multiple layers. The thickness of the coated carbon layer was 10 nm to 100 nm.

The coating of the carbon layer was conducted by placing the Cu foil in a chamber and directly growing horizontally-arranged graphene on the Cu foil while supplying a mixture of a hydrocarbon gas, *e.g*., methane, and an inert gas, *e.g*., nitrogen, at 800°C to 1,100 °C.

### Example 4: Directly-Grown Multilayer Vertically-Arranged Graphene (First Protecting Layer) + PE (10 µm) / Polyacryl foam (80 µm) / PE (10 µm) (Second Protecting Layer)

An anode and an all-solid secondary battery were prepared following substantially the same process as Example 1, except that a 20 µm-thick Cu foil having a carbon layer coated on one side thereof by deposition was utilized as an anode current collector.

By the deposition, graphene vertically arranged with respect to the surface of the Cu foil was directly grown in multiple layers. The thickness of the coated carbon layer was 100 nm to 20 µm.

The coating of the carbon layer was conducted by placing the Cu foil in a chamber and directly growing vertically-arranged graphene on the Cu foil while supplying a hydrocarbon gas, *e.g*., methane, at 800 °C to 1,100 °C. No inert gas was utilized.

### Example 5: Bi-Cell All-Solid Secondary Battery

### Preparation of Porous Multilayer Member, Solid Electrolyte Layer, Anode Layer, and Inactive Member

A porous multilayer member, a solid electrolyte layer, an anode layer, and an inactive member were prepared following substantially the same process as in Example 1.

### Preparation of Cathode Layer

LiNi_{0.8}Co_{0.15}Mn_{0.05}O₂ (NCM) coated with Li₂O-ZrO₂ (LZO) was prepared as a cathode active material. LZO-coated cathode active material was prepared following the process disclosed in Korean Patent No. 10-2016-0064942, the entire content of which is hereby incorporated by reference. As a solid electrolyte, argyrodite-type or kind crystal Li₆PS₅Cl (D50=0.5 µm, crystalline) was prepared. As a binder, a polytetrafluoroethylene (PTFE) binder was prepared. As a conducting agent, carbon nanofibers (CNFs) were prepared. These materials were mixed at a weight ratio of cathode active material: solid electrolyte : binder : conducting agent = 84 : 11.5 : 3 : 1.5 with xylene as solvent, and the resulting slurry was molded into a sheet, and the sheet was vacuum-dried at 40 °C for 8 hours to prepare a cathode sheet. Using a cathode current collector formed of an aluminum foil coated with a carbon layer on both sides thereof, the prepared cathode sheet was placed on each side of the cathode current collector and subjected to a heated roll-press at 85 °C to prepare a cathode layer. The total thickness of the cathode layer was about 220 µm. The thickness of each cathode active material layer was about 96 µm, and the thickness of the carbon-coated aluminum foil was about 28 µm.

### Preparation of All-Solid Secondary Battery

As shown in FIG. 5, the solid electrolyte layer was disposed on the anode layer, such that the first anode active material layer is contiguous with the solid electrolyte layer. A flame-retardant inactive member was thermally pressed on the solid electrolyte layer to prepare two anode layer/solid electrolyte layer/inactive member laminates.

The inactive member was placed on both sides of the cathode layer, such that each inactive member is facing the cathode active material layer, to prepare an anode layer/solid electrolyte layer/cathode layer/solid electrolyte layer/anode layer electrode assembly. The inactive member was disposed around the cathode layer, around (*e.g*., surrounding) a side surface of the cathode layer while in contact with the solid electrolyte layer. The inactive member was utilized as a gasket. The cathode layer was disposed in the center portion of the solid electrolyte layer, and the gasket was placed extending to a terminal portion of the solid electrolyte layer, while around (e.g., surrounding) the cathode layer. The surface area of the cathode layer was about 90% of the surface area of the solid electrolyte layer, and the gasket was positioned in all of the remaining 10% of the surface area of the solid electrolyte layer that does not have the cathode layer disposed therein.

Using the prepared electrode assembly, an all-solid secondary battery was prepared following substantially the same process as Example 1.

### Comparative Example 1: Carbon Coating Layer-Free Anode Current Collector

An anode and an all-solid secondary battery were prepared following substantially the same process as Example 1, except that as the anode current collector, a 20 µm-thick Cu foil was utilized as is.

### Comparison Example 2: PE (10 µm) Porous Monolayer Member

An all-solid secondary battery was prepared following substantially the same process as in Example 1, except that a 20 µm-thick Cu foil was utilized as is as the anode current collector, the porous multilayer member was changed to a 10 µm-thick porous polyethylene film monolayer member, and the supply mechanism of the porous multilayer member was changed to a reel supply mechanism. The thickness of the porous polyurethane foam sheet was 100 µm.

### Comparative Example 3: Polyacryl Foam Sheet (80 µm) Porous Monolayer Member

An all-solid secondary battery was prepared following substantially the same process as in Example 1, except that a 20 µm-thick Cu foil was utilized as is as the anode current collector, and the porous multilayer member was changed to an 80 µm-thick porous polyacryl foam sheet monolayer member.

### Comparative Example 4: Polytetrafluoroethylene Foam Sheet (80 µm) Porous Monolayer Member

An all-solid secondary battery was prepared following substantially the same process as in Example 1, except that a 20 µm-thick Cu foil was utilized as is as the anode current collector, and the porous multilayer member was changed to an 80 µm-thick porous polytetrafluoroethylene foam sheet monolayer member.

### Reference Example 1: Free of Inactive Member

An all-solid secondary battery was prepared following substantially the same process as in Example 1, except that the inactive member was not disposed around the cathode active material layer.

### Evaluation Example 1: Cycling Test

The all-solid secondary batteries prepared in Examples 1 to 4, Comparative Examples 1 and 3, and Reference Example 1 were each evaluated for cycling performance by a cycling test as follows. The cycling test was performed with each all-solid secondary battery placed in a constant-temperature bath at 45 °C.

In the first cycle, each battery was charged at a constant current of 0.1 C rate until the battery voltage reached 4.2 V, and once 4.2 V was reached, the charging was performed in a constant voltage mode at 4.2 V and cut-off at 0.05 C. Subsequently, the battery was discharged with a constant current of 0.1 C rate until the battery voltage reached 2.6 V.

After the first cycle, the charging and discharging were performed up to 250 cycles under the same conditions as the first cycle. An increase in the cycle number at which a short-circuit occurs indicates an improvement in lifetime characteristics.

For battery manufacturing ease, × indicates difficulty in the manufacturing and handling of an all-solid secondary battery with regard to aligning the electrode assembly to match the dimensions of the press plates when both sides of the electrode assembly had adhesive properties due to the adhesive porous member attached to both sides of the electrode assembly. Further, ∘ indicates ease of the manufacturing and handling of an all-solid secondary battery with regard to aligning the electrode assembly to match the dimensions of the press plates when both sides of the electrode assembly did not have adhesive properties as the non-adhesive porous member was disposed on both sides of the electrode assembly.

Relative battery manufacture speed was evaluated for the time it took to manufacture an all-solid secondary battery by aligning the electrode assembly between the press plates, depending on whether the porous member disposed on the electrode assembly has adhesive properties.

Higher relative battery manufacture speed indicates the battery manufacturing took less time, and lower relative battery manufacture speed indicates the battery manufacturing took more time.

**Table 1**

| | Ease of Battery Manufacture | Relative Speed of Battery Manufacture | Cycle at which the short-circuit occurs [Cycles] |
|---|---|---|---|
| Example 1 | ○ | 6 | 400 |
| First Protecting Layer: Wet-coated Graphene | | | |
| Second Protecting Layer: PE(10 µm)/Polyacrylic Foam(80 µm)/PE(10 µm) | | | |
| Example 2 | ○ | 6 | 500 |
| First Protecting Layer: N-doped Graphene Wet Coating | | | |
| Second Protecting Layer: PE(10 µm)/Polyacrylic Foam(80 µm)/PE(10 µm) | | | |
| Example 3 | ○ | 6 | 1000 |
| First Protecting Layer: directly-grown graphene multilayer horizontal deposition | | | |
| Second Protecting Layer: PE(10 µm)/polyacrylic foam(80 µm)/PE(10 µm) | | | |
| Example 4 | ○ | 6 | 800 |
| First Protecting Layer: Directly-Grown Graphene Multilayer Vertical Deposition | | | |
| Second Protecting Layer: PE(10 µm)/Polyacrylic Foam(80 µm)/PE(10 µm) | | | |
| Comparative Example 1 | ○ | 6 | 180 |
| First Protecting Layer: Free | | | |
| Second Protecting Layer: PE(10 µm)/polyacrylic foam(80 µm)/PE(10 µm) | | | |
| Comparative Example 2 | ○ | 8 | 2 |
| First Protecting Layer: Free | | | |
| Second Protecting Layer: PE only (10 µm) | | | |
| Comparative Example 3 | × | 1 | 180 |
| First Protecting layer: Free | | | |
| Second Protecting layer: Polyacrylic foam only (80 µm) | | | |
| Comparative Example 4 | × | 1 | 40 |
| First Protecting Layer: Free | | | |
| Second Protecting Layer: PTFE foam only (80 µm) | | | |

As shown in Table 1, the all-solid secondary batteries of Examples 1 to 5 provide excellent or suitable manufacturing ease of all-solid secondary batteries, excellent or suitable battery manufacturing speed, and excellent or suitable lifetime characteristics of batteries.

The all-solid secondary batteries of Comparative Examples 1 to 3 show relatively poor lifetime characteristics due to not including the first protecting layer.

The all-solid secondary battery of Comparative Example 2 shows significantly poorer lifetime characteristics due to including neither the first protecting layer nor the second protecting layer.

The all-solid secondary battery of Comparative Example 3 shows significantly poorer all-solid secondary battery manufacturing ease and poor manufacturing speed due to not including the second protecting layer.

The all-solid secondary battery of Comparative Example 4 shows poor all-solid secondary battery manufacturing ease, poor manufacturing speed, and poor lifetime characteristics due to utilizing a material with poor cushioning ability in the second protecting layer.

In addition, the all-solid secondary battery of Example 6 showed improved lifetime characteristics due to structural stability improvement relative to the all-solid secondary battery of Example 1.

In addition, the all-solid secondary battery of Reference Example 1, due to not including the inactive member gasket, shows poorer lifetime characteristics, indicated by the number of cycles before the short-circuit occurred being less than that of the all-solid secondary battery of Example 1.

In the all-solid secondary batteries of Examples 1 to 3, SEM images of cross-sections of these batteries after the first cycle charging was complete, show the formation of a lithium metal plated layer, corresponding to the second anode active material layer, between the first anode active material layer and the anode current collector.

In the all-solid secondary batteries of Examples 1 to 4, the relative size of bulk density of the first protecting layer (carbon coating layer) was in the order of Example 3 > Example 4 > Example 1 ≒ Example 2. The bulk density of dry-coated graphene layer was higher than the bulk density of wet-coated graphene layer. Further, the bulk density of horizontally-arranged graphene layer was higher than the bulk density of vertically-arranged graphene layer.

As described above, the all-solid secondary battery associated with the present examples may be applied to a variety of portable devices, vehicles, and/or the like.

According to aspects of embodiments of the present disclosure, an all-solid secondary battery having a novel structure may allow a rapid and efficient manufacturing of an all-solid secondary battery which has improved cycling performance and in which short circuits are suppressed or reduced.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (*i.e*., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. An all-solid secondary battery (1) comprising:
an electrode assembly (40) comprising:
a cathode layer (10),
an anode layer (20, 20a, 20b), and
a solid electrolyte layer between the cathode layer (10) and the anode layer (20, 20a, 20b),
wherein,
the cathode layer (10) comprises a cathode current collector (11),
the solid electrolyte layer (30, 30a, 30b) comprises a sulfide-based solid electrolyte,
the anode layer (20, 20a, 20b) comprises:
an anode current collector (21, 21a, 21b),
a first anode active material layer (22, 22a, 22b), and
a first protecting layer (23, 23a, 23b) between the anode current collector (21, 21a, 21b) and the first anode active material layer (22, 22a, 22b),
the electrode assembly (40) comprises a second protecting layer (50, 50a, 50b) on one surface or both surfaces thereof,
the first protecting layer (23, 23a, 23b) is a conductive coating layer comprising a carbon-based material,
the second protecting layer (50, 50a, 50b) comprises a porous multilayer member (51), and
the porous multilayer member (51) comprises a porous cushioning layer (52) and a porous covering layer (53) on one surface or both surfaces of the porous cushioning layer (52).

2. The all-solid secondary battery (1) of claim 1,
wherein the carbon-based material comprises a carbon-based nanostructure, and the carbon-based nanostructure comprises a two-dimensional carbon-based nanostructure, and
wherein the two-dimensional carbon-based nanostructure comprises graphene, graphene oxide, reduced graphene oxide, or a combination thereof.
and/or
wherein the carbon-based material comprises graphene doped with a dopant, the dopant being an n-type dopant or a p-type dopant, and
the dopant comprises nitrogen (N), phosphorus (P), boron (B), sulfur (S), fluorine (F), chlorine (CI), bromine (Br), germanium (Ge), gallium (Ga), or a combination thereof.
and/or
wherein the carbon-based material is arranged in a fixed direction with respect to a surface of the anode current collector (21, 21a, 21b), and
the carbon-based material is arranged in a direction parallel to the surface of the anode current collector (21, 21a, 21b) or arranged in an out-of-plane direction with respect to the surface of the anode current collector (21, 21a, 21b).

3. The all-solid secondary battery (1) of claim 1 or 2, wherein the first protecting layer (23, 23a, 23b) further comprises a binder and has a thickness of 10 µm or less
and/or
the first protecting layer (23, 23a, 23b) is directly on the anode current collector (21, 21a, 21b) and is inert with respect to the sulfide-based solid electrolyte.

4. The all-solid secondary battery (1) of any of the claims 1 to 3,
wherein,
the second protecting layer (50, 50a, 50b) is on the anode layer (20, 20a, 20b),
the anode current collector (21, 21a, 21b) comprises a first surface and a second surface opposite the first surface, and
the first protecting layer (23, 23a, 23b) is on the first surface, and the second protecting layer (50, 50a, 50b) is on the second surface.

5. The all-solid secondary battery (1) of any of the claims 1 to 4,
wherein,
an elastic modulus of the porous cushioning layer (52) is smaller than an elastic modulus of the porous covering layer (53),
a thickness of the porous cushioning layer (52) is greater than a thickness of the porous covering layer (53),
the porous cushioning layer (52) has a thickness of about 10 µm to about 200 µm and an air permeability of 1,000 sec/100 cc or more,
the porous cushioning layer (52) comprises a porous foam, a porous sponge, or a combination thereof,
the porous foam and the porous sponge each independently comprise a closed cell, an open cell, or a combination thereof, and
the porous cushioning layer (52) is an adhesive layer.

6. The all-solid secondary battery (1) of claim 1 to 5,
wherein,
the porous cushioning layer (52) comprises a polymer material, a rubber material, or a combination thereof,
the polymer material comprises a polyurethane-based polymer, a polyacrylic-based polymer, a polystyrene-based polymer, a polyester-based polymer, a polyamide-based polymer, a polyolefin-based polymer, or a combination thereof, and
the rubber material comprises natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene rubber (CR), halogenated isoprene rubber, halogenated isobutylene copolymers, butyl rubber (IIR), halogenated isobutylene-p-methyl styrene rubber, or a combination thereof.

7. The all-solid secondary battery (1) of any of the claims 1 to 6,
wherein,
the porous covering layer (53) is a non-adhesive layer, and
the porous covering layer (53) has a thickness of about 1 µm to about 50 µm, an air permeability of 1,000 sec/100 cc or less, a porosity of about 5 % to about 95%, and a pore size of about 0.01 µm to about 20 µm.
and/or
the porous covering layer (53) comprises a polyolefin-based polymer, a cellulose-based polymer, or a combination thereof,
the porous covering layer (53) comprises a porous film, and
the porous film is a woven fabric or a nonwoven fabric, the porous film comprises cellulose nanofibers, and the porous film has a monolayer structure or a multilayer structure.

8. The all-solid secondary battery (1) of any of the claims 1 to 7
wherein,
the first anode active material layer (22, 22a, 22b) comprises a carbon-based anode active material, a metal-based anode active material or a combination thereof,
the metal-based anode active material forms an alloy or compound with lithium
the carbon-based anode active material comprises amorphous carbon, and
the metal-based anode active material comprises an alloy-forming element selected from among gold (Au), platinum (Pt), palladium (Pd), silicon (Si), silver (Ag), aluminum (Al), bismuth (Bi), tin (Sn), zinc (Zn), and a combination thereof, preferably the metal-based anode active material has a form of particles, and a particle diameter of the particles is about 10 nm to about 4 µm.

9. The all-solid secondary battery (1) of any of the claims 1 to 8,
wherein,
the first anode active material layer (22, 22a, 22b) further comprises a binder, an amount of the binder is about 0.5 parts by weight to about 30 parts by weight with respect to 100 parts by weight of the first anode active material layer (22, 22a, 22b),
the cathode layer (10) comprises a cathode active material layer, and
a ratio (C1/C2) of charge capacity (C1) of the first anode active material layer (22, 22a, 22b) to charge capacity (C2) of the cathode active material layer is about 0.001 to about 0.45.

10. The all-solid secondary battery (1) of any of the claims 1 to 9, further comprising a second anode active material layer between the anode current collector (21, 21a, 21b) and the first anode active material layer (22, 22a, 22b),
wherein,
the second anode active material layer is between the first anode active material layer (22, 22a, 22b) and the first protecting layer (23, 23a, 23b),
the second anode active material layer is a metal layer comprising lithium or a lithium alloy, and
the second anode active material layer is a plated layer.

11. The all-solid secondary battery (1) of any of the claims 1 to 10,
wherein,
at least one of the cathode current collector (11) or the anode current collector (21, 21a, 21b) comprises a base film and a metal layer on one surface or both surfaces of the base film,
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

12. The all-solid secondary battery (1) of any of the claims 1 to 11, further comprising an inactive member on one side surface of the cathode layer (10),
wherein the inactive member is along a side surface of the cathode layer (10) to surround the cathode layer (10) and
the inactive member comprises a position determining portion configured to determine a position of the inactive member on the solid electrolyte layer (30, 30a, 30b).

13. The all-solid secondary battery (1) of any of the claims 1 to 12,
wherein,
the cathode layer (10) comprises a cathode active material layer, the cathode active material layer comprises a cathode active material,
the cathode active material comprises an oxide-based cathode active material, a sulfide-based cathode active material, or a combination thereof,
the oxide-based cathode active material comprises a lithium transition metal oxide, a metal oxide, or a combination thereof,
the lithium transition metal oxide comprises lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof,
the metal oxide comprises an iron oxide, a vanadium oxide, or a combination thereof, and
the sulfide-based cathode active material comprises a nickel sulfide, copper sulfide, Li₂S, a Li₂S-containing composite, or a combination thereof,
preferably the cathode active material layer further comprises a solid electrolyte, and the solid electrolyte comprises an oxide-based solid electrolyte or a sulfide-based solid electrolyte.

14. The all-solid secondary battery (1) of any of the claims 1 to 13,
wherein the cathode active material comprises a lithium transition metal oxide represented by at least one selected from among Formulas 1 to 7:
Formula 1 LiₐNiₓCo_{y}M_{z}O_{2-b}A_{b}
wherein in Formula 1,
1.0≤a≤1.2, 0≤b≤0.2, 0.8≤x<1, 0≤y≤0.3, 0<z≤0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,
Formula 2 LiNiₓCo_{y}Mn_{z}O₂
Formula 3 LiNiₓCo_{y}Al_{z}O₂
wherein in Formulas 2 and 3, 0.8≤x≤0.95, 0≤y≤0.2, 0<z≤0.2, and x+y+z=1,
Formula 4 LiNiₓCo_{y}Mn_{z}Al_{w}O₂
wherein in Formula 4, 0.8≤x≤0.95, 0≤y≤0.2, 0<z≤0.2, 0<w≤0.2, and x+y+z+w=1,
Formula 5 LiₐNiₓMnyM'_{z}O_{2-b}A_{b}
wherein in Formula 5,
1.0≤a≤1.2, 0≤b≤0.2, 0.8≤x<1, 0<y≤0.2, 0≤z≤0.2, and x+y+z=1,
M' is niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,
Formula 6 LiₐM1ₓM2_{y}PO_{4-b}X_{b},
wherein, in Formula 6, 0.90≤a≤1.1, 0≤x≤0.9, 0≤y≤0.5, 0.9<x+y<1.1, 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof, and
Formula 7 LiₐM3_{z}PO₄,
wherein, in Formula 7, 0.90≤a≤1.1, 0.9≤z≤1.1, and
M3 is chromium (Cr), manganese (Mn), iron (Fe), cobalt (Co), nickel (Ni), copper (Cu), zirconium (Zr), or a combination thereof.

15. The all-solid secondary battery (1) of any of the claims 1 to 14,
wherein the solid electrolyte layer (30, 30a, 30b) comprises an electrolyte,
wherein the electrolyte comprises a solid electrolyte, a gel electrolyte, or a combination thereof,
wherein the solid electrolyte comprises a sulfide-based solid electrolyte, an oxide-based solid electrolyte, a polymer solid electrolyte, or a combination thereof, and
wherein the gel electrolyte comprises a polymer gel electrolyte.
